(19) Europäisches Patentamt
European Patent Office
Office européen des brevets

(11) **EP 3 083 513 B1**

(12) **EUROPEAN PATENT SPECIFICATION**

(45) Date of publication and mention of the grant of the patent:
**06.10.2021 Bulletin 2021/40**

(21) Application number: **14824679.6**

(22) Date of filing: **16.12.2014**

(51) Int Cl.:
*C03B 33/02* (2006.01)   *B23K 26/00* (2014.01)
*B23K 26/06* (2014.01)   *B23K 26/40* (2014.01)
*C03B 33/07* (2006.01)   *C03B 33/09* (2006.01)
*C03B 25/087* (2006.01)   *C03B 29/10* (2006.01)
*C03C 23/00* (2006.01)   *B23K 26/0622* (2014.01)
*B23K 26/57* (2014.01)   *B23K 26/359* (2014.01)
*B23K 103/00* (2006.01)   *B23K 26/53* (2014.01)
*B23K 103/16* (2006.01)

(86) International application number:
**PCT/US2014/070524**

(87) International publication number:
**WO 2015/095146 (25.06.2015 Gazette 2015/25)**

(54) **LASER CUTTING OF ION-EXCHANGEABLE GLASS SUBSTRATES**

LASERSCHNEIDEN VON IONENAUSTAUSCHBAREN GLASSUBSTRATEN

DECOUPAGE AU LASER DE SUBSTRATS DE VERRE A CAPACITE D'ECHANGE D'IONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2013 US 201361917128 P**
**11.07.2014 US 201462023251 P**
**31.10.2014 US 201414529697**

(43) Date of publication of application:
**26.10.2016 Bulletin 2016/43**

(73) Proprietor: **Corning Incorporated**
**Corning, New York 14831 (US)**

(72) Inventors:
• **MARJANOVIC, Sasha**
**Painted Post, New York 14870 (US)**
• **PIECH, Garrett Andrew**
**Corning, New York 14830 (US)**
• **TSUDA, Sergio**
**Horseheads, New York 14845 (US)**
• **WAGNER, Robert Stephen**
**Corning, New York 14830 (US)**

(74) Representative: **Elkington and Fife LLP**
**Prospect House**
**8 Pembroke Road**
**Sevenoaks, Kent TN13 1XR (GB)**

(56) References cited:
**US-A1- 2011 049 765    US-A1- 2013 126 573**
**US-A1- 2013 323 469**

• **None**

**Description**

BACKGROUND

Ion-exchanged, or chemically strengthened glasses, are known for their ability to resist damage from scratching and surface impact. These glass compositions have received much attention in recent years as the market for handheld electronic devices has boomed in the form of tablet PCs, smartphones, and a variety of interactive touch-enabled electronics. For Corning, this glass family goes by the trade name of Corning® Gorilla® Glass.

However, the cutting of ion-exchangeable glass compositions can be challenging for a number of reasons. First, if cut after ion exchange (IOX), the glass can be under a high degree of tension, which causes it to easily shatter into fragments if the propagation of the cracking induced by the cutting process cut is not well controlled or induces too much secondary damage beyond the cut edge. Second, the ion-exchange process itself can be variable, and thus create parts whose level of internal stress central tension (CT) varies from lot to lot. This means that a cutting process that is tuned to achieve control of the cracking or glass separation at a particular level of central tension may succeed at cutting one batch of ion-exchanged parts, and fail for another batch of ion-exchanged parts.

Third, for some applications, it can be desirable to cut the glass before ion exchange. In this case, the pre-ion exchange glass will have very little internal stress before the cut, and the cutting and separation process must be amenable to working with this material.

US 2013/0323469 describes a method of cutting a glass article using a laser beam with a beam wasit at or below the surface of the glass article. US2013/012653 teaches a method of prepraing a transparent substrate such as a glass article using a focussed laser beam producing a filament.

SUMMARY

According to the invention, there is provided a method of laser processing an ion-exchangable glass according to claim 1. In embodiments, this process makes use of a short pulse laser in combination with optics that generate a focal line to fully perforate the body of a range of ion-exchangeable glass compositions. The glass is moved relative to the laser beam to create perforated lines that trace out the shape of any desired parts. The glass may be cut pre-ion exchange, or may be cut post-ion exchange. The laser creates hole-like defect zones that penetrate the full depth the glass, of approximately 1 micron in diameter. These perforations or defect regions, damage tracks, are generally spaced from 1 to 20 microns (e.g., 1 to 15 microns) apart.

Beyond single sheets of glass, the process can also be used to cuts stacks of glass, and can fully perforate glass stacks of up to a few mm total height with a single laser pass. The sheets comprising the glass stacks additionally may be separated by air gaps in various locations; the laser process will still, in a single pass, fully perforate both the upper and lower glass layers of such a stack.

Once the glass is perforated, if the glass has sufficient internal stress (e.g., as is the case with many ion exchange strengthened glasses), the cracks will propagate along the perforation lines and the glass sheet will separate into the desired parts. If the glass is low stress, mechanical stress may be applied to separate the parts, or a subsequent pass of a $CO_2$ laser along or near the perforation line is used to create thermal stress which will separate the glass along the same preprogrammed perforation lines.

The result is an ion-exchangeable cut glass piece with high quality edges - a uniform surface texture across the full width of the cut edge, a surface roughness <0.5 micron, and subsurface damage of less than 100 microns, for example less than 75 microns, less than 50 microns, less than 30 microns, or even 20 microns or lower.

The glass parts will generally have edge strength >100 MegaPascals (MPa) as cut by the aforementioned process. But if desired, the glass parts can then be subjected to the following processes to further enhance the edge strength or reliability:

Acid etching in hydrofluoric acid (HF) to blunt or remove the defect edges and small level of subsurface damage and raise the edge strength.

Grinding and polishing to remove the relatively small amount of subsurface damage and raise the edge strength and/or form a beveled or chamfered edge.

For pre-IOX parts, the parts may undergo ion-exchange to add compressional stress thus enhancing the edge strength. This laser process can cut ion-exchangeable glasses either pre or post-IOX.

If there is no need for a later $CO_2$ laser separation step, the process can be utilized can cut post-IOX (post ion exchanged) glasses with central tension (CT) levels ranging, for example, from 24 to 104 MegaPascals (MPa).

The process can achieve very tight or well controlled strength distributions for as-cut edges which leads to higher manufacturing yield and more reliability during handling and shipping.

This laser process also achieves nearly symmetric strength on top/bottom side of the glass - this is very hard to do with other cutting methods. This obviates the need to track the top/bottom surfaces of a glass sheet post-cut.

The process leads to subsurface damage in the cut edges of ion-exchangeable glasses, for example, of as low as 25 microns, which greatly reduces the time or number of steps required for later grinding and polishing.

The laser process can be advantageously combined with post-cut processing to achieve exceptionally high edge strengths (>500 MPa) needed for final part reliability.

The laser process can cut glass even with significant fly height variation - the system does not need to control optics to glass distance precisely. This allows the warp often present in large sheets of glass to be accommodated without the need for mapping of the magnitude of such sheet warp, which entails further costly equipment and longer process time to perform the warp measurements.

The laser process can cut extremely high central tension materials, such as glasses with central tension above 100MPa, that cannot be reliably cut with high yields with other methods.

The laser process can cut a wide CT range with a common set of laser parameters, accommodating IOX process variability and obviating the need for costly and time-intensive stress measurements on the sheets being supplied to the cutting process.

By cutting stacks, the laser process can increase machine throughput, lowering cost.

The laser process described herein can cut through air gaps - it does not suffer from beam expansion and defocus in the gap.

In one embodiment, a method of laser processing an ion-exchangeable glass workpiece includes focusing a pulsed laser beam into a laser beam focal line oriented along a beam propagation direction of the pulsed laser beam. The laser beam focal line is directed into the ion-exchangeable glass workpiece, the laser beam focal line generating an induced absorption within the material, and the induced absorption producing a defect line or a damage track along the laser beam focal line within the workpiece. The method further includes translating the workpiece and the laser beam relative to each other along a contour, thereby laser forming a plurality of defect lines along the contour within the workpiece, wherein a periodicity between adjacent defect lines is between 0.5 micron and 20 microns.

A glass article as defined in independent claim 12 forms also part of the invention.

Preferred embodiments of the invention are defined in dependent claims 2-11 and 13-15.

In another embodiment of the invention, a glass article includes ion-exchangeable glass, and the glass article has at least one edge having a plurality of defect lines extending at least 250 microns, the defect lines each having a diameter less than or equal to about 5 microns. A spacing of adjacent defect lines (or distance or periodicity between defect lines) of the plurality of defect lines can be between 0.1 and 20 microns. The distance can further be less than or equal to about 7 microns.


BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating the exemplary embodiments.

FIG. 1 is a schematic illustration of a drilling method that uses a line focus of a laser beam to create damage tracks or holes in a piece of glass.

FIGS. 2A and 2B are illustrations of positioning of the laser beam focal line, i.e., the processing of a material transparent for the laser wavelength due to the induced absorption along the focal line.

FIG. 3A is an illustration of an optical assembly for laser processing according to one embodiment.

FIG. 3B-1 through 3B-4 are illustrations of various ways of processing the substrates by differently positioning the laser beam focal line relative to the substrate.

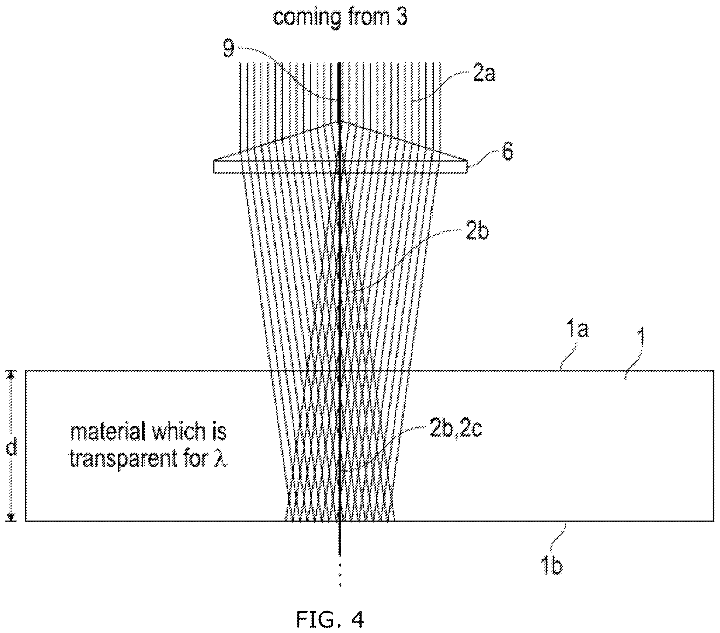

FIG. 4 is an illustration of a second embodiment of an optical assembly for laser processing.

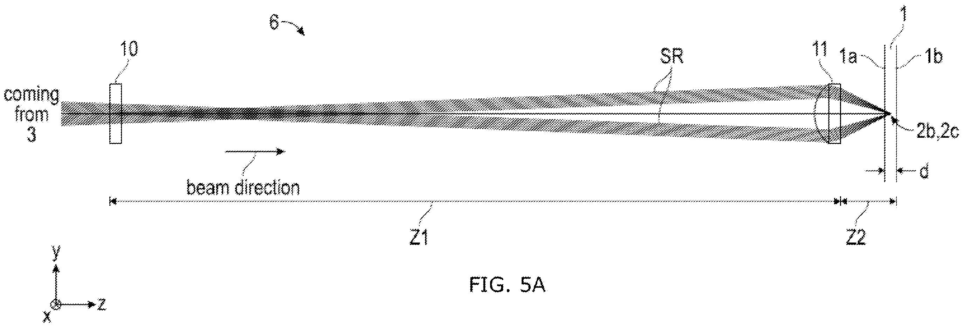

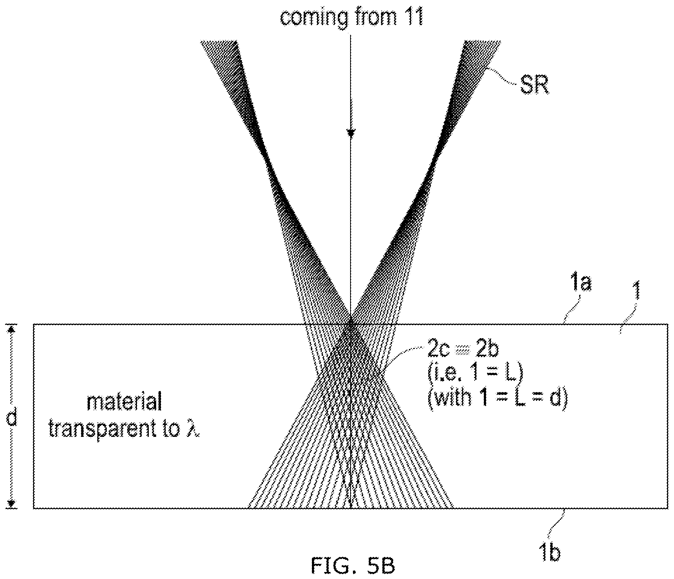

FIGS. 5A and 5B are illustrations of a third embodiment of an optical assembly for laser processing.

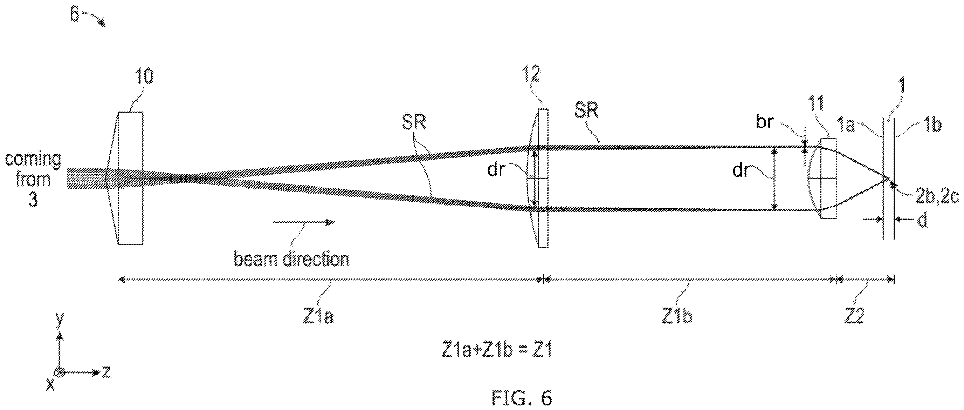

FIG. 6 is a schematic illustration of a fourth embodiment of an optical assembly for laser processing.

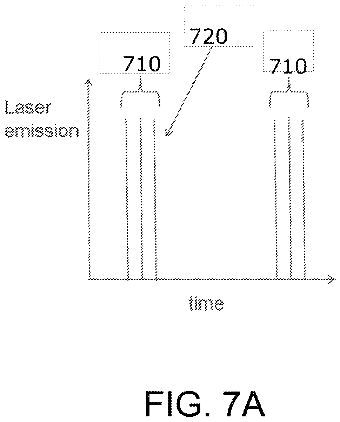

FIGs. 7A-7C illustrate, schematically, laser emission (intensity of laser pulses within exemplary pulse bursts) versus time for exemplary picosecond lasers.

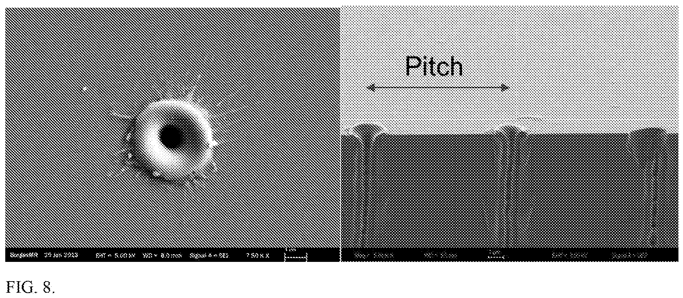

FIG. 8 shows a scanning electron micrograph of the features formed by the laser process described in this disclosure. Pitch is the separation distance between these features.

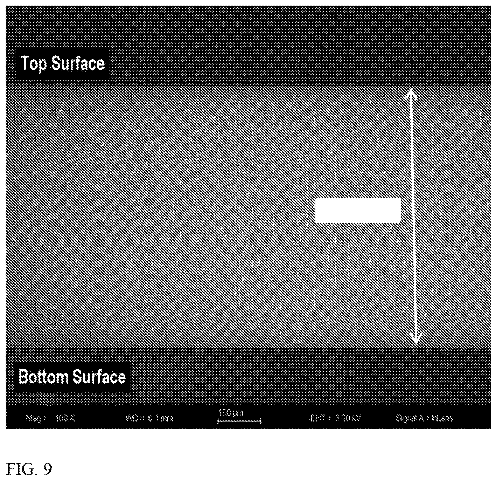

FIG. 9 shows an electron micrograph of the cut edge of pre-IOX code 2320 (pre-ion exchanged) glass available from Corning Incorporated.

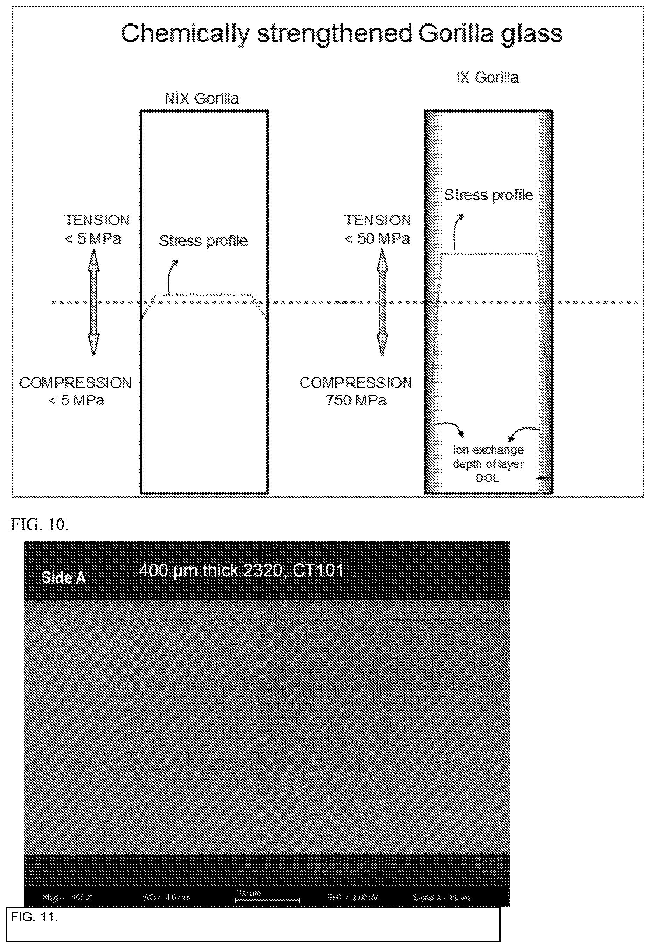

FIG. 10 shows an example comparison of the internal stress level and stress profiles between pre-ion and post ion exchange sample of Gorilla® glass.

FIG. 11 is an image of single-pass laser cut edge for 400 micron thick code 2320 glass of central tension (CT) of 101 MPa.

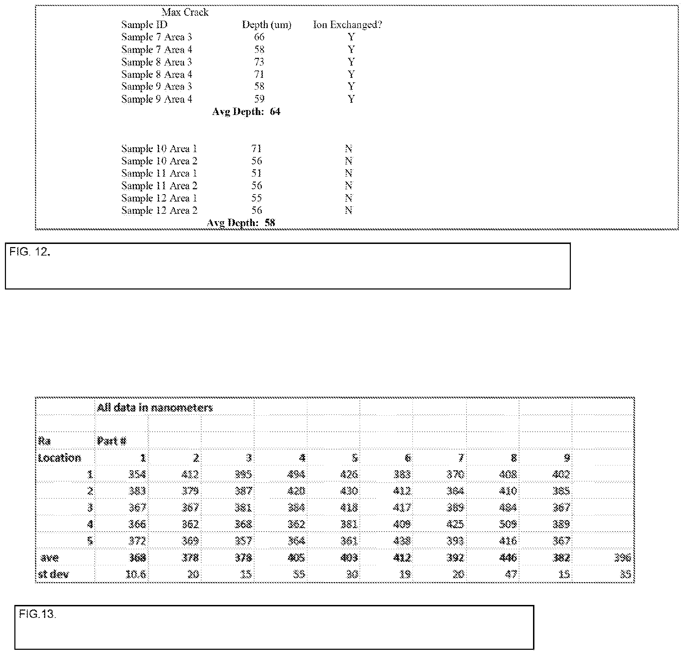

FIG. 12 is a table showing subsurface damage (SSD) measurements of the cut edge of 0.7mm thick 2320 parts cut with the process described in this disclosure. The values were measured using a confocal microscope.

FIG. 13 is a table showing surface roughness of the cut edge of 0.7mm thick 2320 parts cut with a process described in this disclosure.

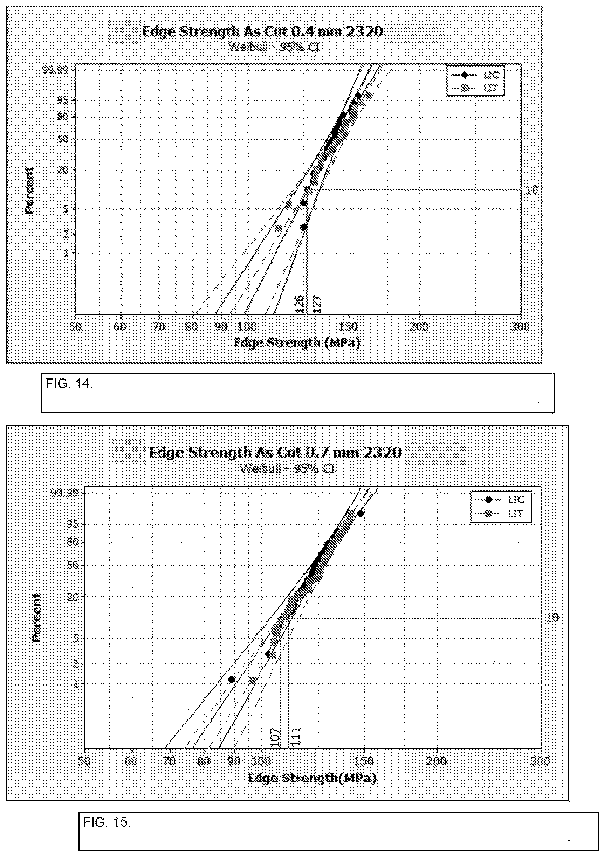

FIG. 14 shows a Weibull plot of the 4-point bend edge strength for chemically strengthened 0.4mm thick 2320, CT~100 MPa.

FIG. 15 shows a Weibull plot of the 4-point bend edge strength for chemically strengthened 0.7 mm thick 2320, CT~50 MPa.

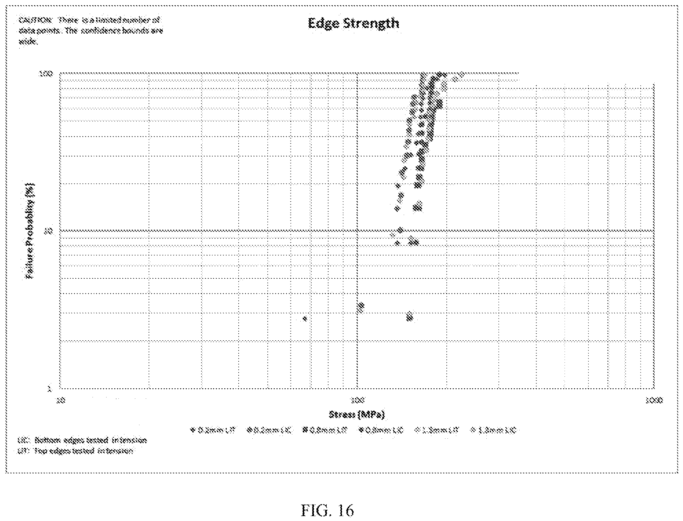

FIG. 16 is a graph showing the effect of fly-height variation on 4-point bend edge strength.

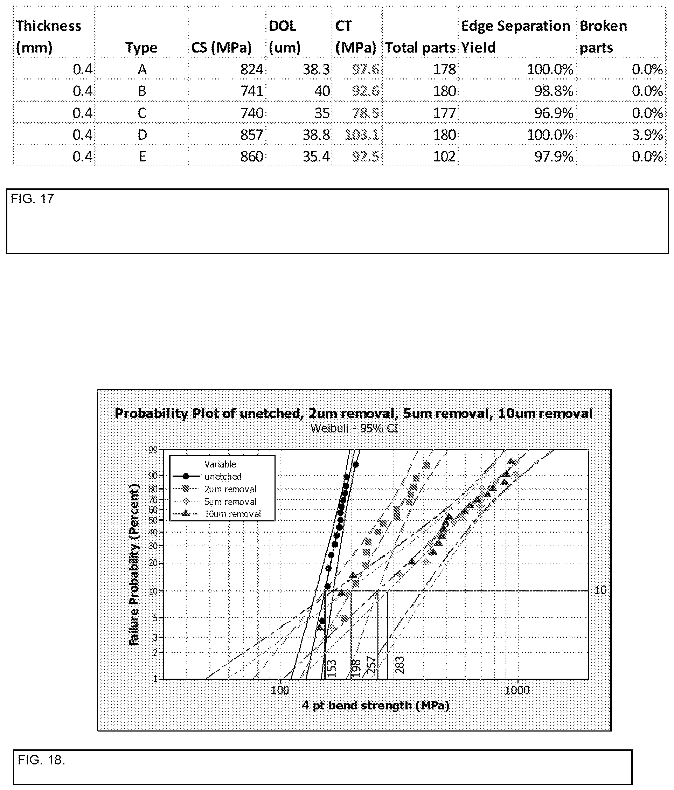

FIG. 17 is a table summary of tests performed to cut a set of glass sheets made with a variety of ion-exchange conditions.

FIG. 18 is a graph illustrating improved edge strength as a result of acid etching 0.7 mm thick code 2320 glass (45 MPa central tension (CT)) cut with a process according to this invention.

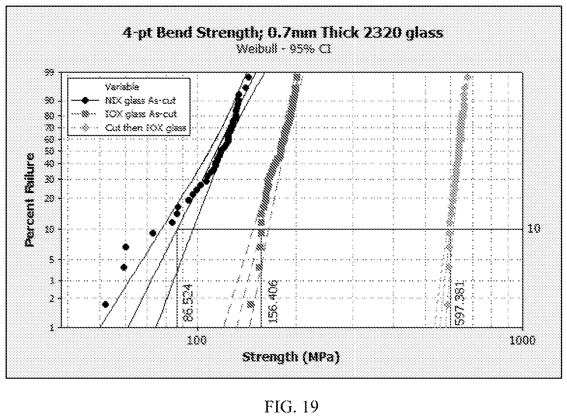

FIG. 19 is a graph of edge strength from 0.7 mm thick 2320 glass cut with the laser process described in this disclosure.

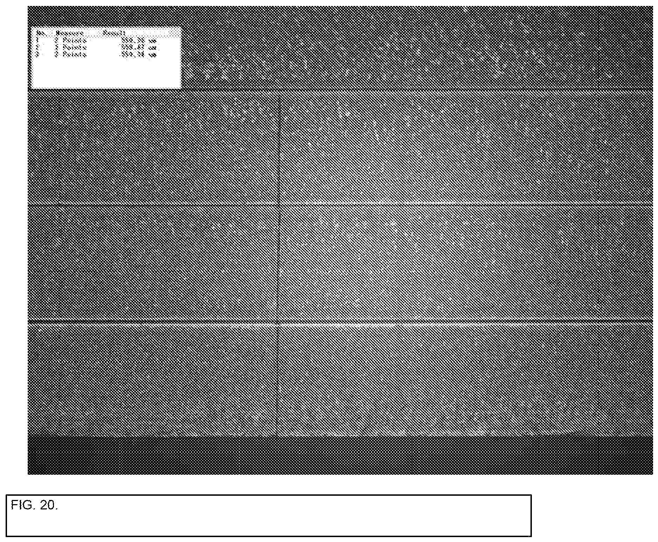

FIG. 20 is an edge image of a cut of 4 stacked sheets of 0.55 mm thick code 2320 glass with a single laser pass.

## DETAILED DESCRIPTION OF THE INVENTION

A description of example embodiments follows.

Described herein is an application of a laser cutting technology to the cutting of ion-exchangeable glass compositions. As referred to herein "a work piece made of an ion-exchangeable glass composition" or "an ion-exchangeable glass" are work pieces or glasses made either from glass that is ion exchangeable but not yet ion-exchanged, or from the glass that was originally ion-exchangeable and was ion-exchanged (-i.e., -IOX and glass, and of pre-IOX (pre-ion exchanged) glass. The glasses are, for example, aluminosilicate glasses that are chemically strengthened or are capable of being chemically strengthened through an ion exchange (IOX) process. Such glasses typically include a total alkali oxide (e.g., $Li_2O$, $Na_2O$, and $K_2O$) content of about 10 mol% or greater, prior to and after being strengthened.

This laser process allows for the cutting of ion-exchangeable glasses over an extremely wide range of levels of central tension (CT), including glasses pre-IOX (very low tension, e.g., < 20 MPa or even $\leq$ 5 MPa), and glasses with the highest central tension (>100 MegaPascals (MPa)) on the market. It is noted that the ion exchange process changes the glass such that compositionally uniform ion-exchangeable glass with CT < 20MPa is strengthened by the ion exchange process, forming a "layered" structure with layers situated near the surfaces being under compressive stress. This layers of compressive stress develop because near the exposed surfaces of the glass the ion exchange process chemically modifies the glass by, for example, replacing smaller sodium (Na) ions that were originally in the glass with larger potassium (K) ions from a salt bath. These outer compressive regions or layers then force the inner or central layer of post-ion exchanged glass to be under the tensile stress. In contrast, the pre-ion exchanged glass does not contain such layers of different stresses or chemical composition. In all of these glasses, the described laser process can be used to make straight cuts, for example at speeds of 1 m/sec or greater, to cut sharp radii outer corners (<1 mm), and to create arbitrary curved shapes including forming interior holes and slots. The ion-exchangeable glass compositions should preferably be substantially transparent to the selected laser wavelength (i.e., absorption less than about 10%, and preferably less than about 1% per mm of material depth). This wavelength may be, for example, 1064, 532, 355 or 266 nanometers. Beyond having the adaptability to accommodate this wide range of glass internal stress, the process is also remarkably insensitive to an incoming variation in glass central tension levels, without needing to vary the laser processing conditions at all. In addition, the present application describes methods of cutting the glasses and then subsequently processing the parts with a variety of methods to raise the edge strength of the cut glass part to levels much higher than can be achieved with the cutting process alone. The methods described herein can also cut stacks of these glasses in a single pass, improving process time and machine utilization.

Laser and Optical System

For the purpose of cutting transparent substrates, especially glass, a method was developed that uses picosecond laser (e.g., a 1064 nm picosecond pulse burst laser) in combination with line-focus beam forming optics to create lines of damage in the substrates. This is detailed below and a similar optical system is described in U.S. Application No. 61/752,489 filed on January 15, 2013. The line focus enables the creation of high aspect ratio defect lines in the mediums, created by the ultra-short pulsed laser (which produces, for example, bursts of multiple pulses, with pulse width less than 100 psec). It allows creation of a fault line (also referred to as a defect line herein) that can extend from the top to the bottom surfaces of the material to be cut. In some embodiments, the pulse duration of the individual pulses is in a range of between greater than about 1 picoseconds and less than about 100 picoseconds, such as greater than about 5 picoseconds and less than about 20 picoseconds, and the repetition rate of the individual pulses can be in a range of between about 1 kHz and 4 MHz, such as in a range of between about 10 kHz and 650 kHz.

In addition to a single pulse operation at the aforementioned repetition rates, the pulses can be produced in bursts of two pulses, or more (such as, for example, 3 pulses, 4, pulses, 5 pulses , 10 pulses, 15 pulses, 20 pulses, or more) separated by a duration between the individual pulses within the burst that is in a range of between about 1 nsec and about 50 nsec, for example, 10 to 30 nsec, such as about 20 nsec, and the burst repetition frequency can be in a range of between about 1 kHz and about 200 kHz.

Bursting or producing pulse bursts is a type of laser operation where the emission of pulses is not performed in a uniform and steady stream but rather in tight clusters of pulses. Each pulse burst includes at least two closely spaced pulses. The defect line or a hole is formed in the material when a single burst of pulses strikes essentially the same location on the glass. That is, multiple laser pulses within a single burst correspond to a single defect line or a hole location in the glass. Of course, since the glass is translated (for example by a constantly moving stage) or the beam is moved relative to the glass, the individual pulses within the burst cannot be at exactly the same spatial location on the glass. However they are well within 1 $\mu$m of one another-i. e., they strike the glass at essentially the same location. For example, they may strike the glass at a spacing sp where $0 < sp \leq 500$ nm from one another. For example, when a glass location is hit with a burst of 20 pulses the individual pulses within the burst strike the glass within 250 nm of each other. Thus, in some embodiments 1 nm$<$sp$<$250 nm. In in some embodiments 1 nm$<$sp$<$100 nm.

The pulse burst laser beam can have a wavelength selected such that the material is substantially transparent at this wavelength. The average laser power measured at the material can be greater than 40 micro Joules per mm thickness of material, for example between 40 micro Joules/mm and 2000 microJoules/mm, or between 175 and 1500 microJoules/mm, or for example between 40 microJoules/mm and 1000 micro Joules, or between 200 and 900 micro-Joules/mm. For example, for 0.4 mm-0.7 mm thick Corning code 2320 glass one may use 200 $\mu$J pulse bursts to cut and separate the glass, which gives an exemplary range of 280-500 $\mu$J/mm. The glass is moved relative to the laser beam (or the laser beam is translated relative to the glass) to create perforated lines or contours that trace out the shape of any desired parts.

As defined herein, the diameter or internal diameter of a defect line is the internal diameter of the open channel or air hole in the glass or workpiece. For example, in some embodiments described herein the internal diameter of the defect line is <500 nm, for example $\leq$400 nm, or $\leq$300 nm. Furthermore, the internal diameter of a defect line can be as large as the spot diameter of the laser beam focal line, for example. Thus, the holes or defect lines (also referred to as damage tracks herein) each can have a diameter between 0.1 microns and 100 microns, for example 1.5 to 3.5 microns, or 0.25 to 5 microns, or (e.g., 0.2-0.75 microns). The laser beam focal line can have a length in a range of between about 0.1 mm and about 10 mm, or between about 0.5 mm and about 5 mm, such as about 1 mm, about 2 mm, about 3 mm, about 4 mm, about 5 mm, about 6 mm, about 7 mm, about 8 mm, or about 9 mm, or a length in a range of between about 0.1 mm and about 1 mm, and an average spot diameter in a range of between about 0.1 micron and about 5 microns. These perforations, defect regions, damage tracks, or defect lines are generally spaced from 1 to 15 microns apart (for example, 3-12 microns, or more preferably, 5-10 microns). For example 3-5 microns for non-ion exchanged (NIX) glass, or 5-8 microns for IOX glass.

The generation of a line focus may be performed by sending a Gaussian laser beam into an axicon lens, in which case a beam profile known as a Gauss-Bessel beam is created. Such a beam diffracts much more slowly (e.g. may maintain single micron spot sizes for ranges of hundreds of microns or millimeters as opposed to few tens of microns or less) than a Gaussian beam. Hence the depth of focus or length of intense interaction with the material may be much larger than when using a Gaussian beam only. Other forms or slowly diffracting or non-diffracting beams may also be used, such as Airy beams. The defect lines extend, for example, through the thickness of the glass sheet, and are substantially orthogonal (within 1 degree) to the major (flat) surfaces of the glass sheet.

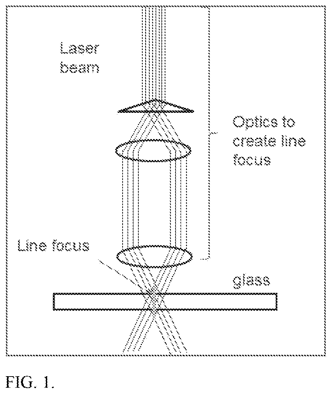

**FIG. 1** illustrates schematically of one embodiment of the concept, where an axicon optical element and other lenses are used to focus light rays into a pattern that will have a linear shape, parallel to the optical axis of the system. The substrate is positioned so that it is within the line-focus. In this exemplary embodiment, with a line-focus of about 1 mm extent (length), and a picosecond laser that produces output power of about 20 W or higher at a repetition rate of about 100 kHz (about 200 micro Joules/pulse measured at the material), the optical intensities in the line region are easily high enough to create non-linear absorption in the material. The pulse burst laser beam can have an average laser energy per pulse burst, measured at the material of greater than 40 microJoules per mm thickness of material. For the cutting of ion-exchangeable glass, the average laser pulse burst energy used can be as high as 2000 $\mu$J per mm of thickness of material, for example 40-100 $\mu$J/mm, with 175-1500 $\mu$J/mm being preferable, and 200-900 $\mu$J/mm more preferable, and 250-600 $\mu$J/mm being even more preferable. This "average laser energy" can also be referred to as an average, per-pulse burst, linear energy density, or an average energy per laser pulse burst per mm thickness of material. A region of damaged, ablated, vaporized, or otherwise modified material is created that approximately follows the linear region of high intensity. The substrate is then moved relative to the optical beam, and a series of damage tracks or lines are created in the material, in effect perforating it along a desired path or contour.

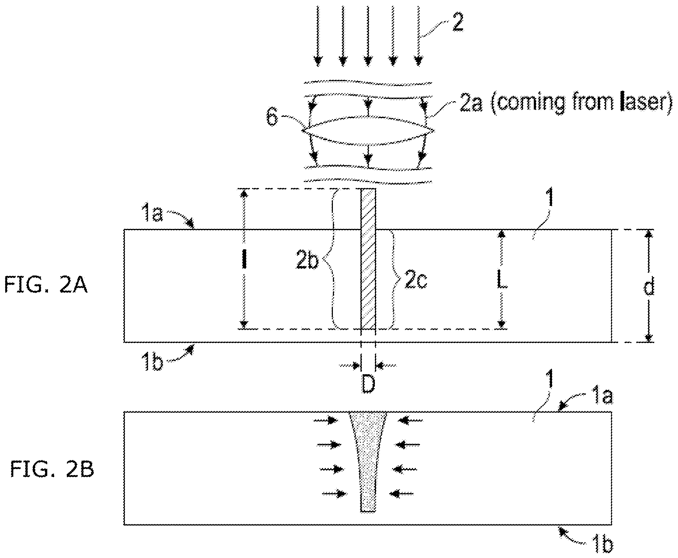

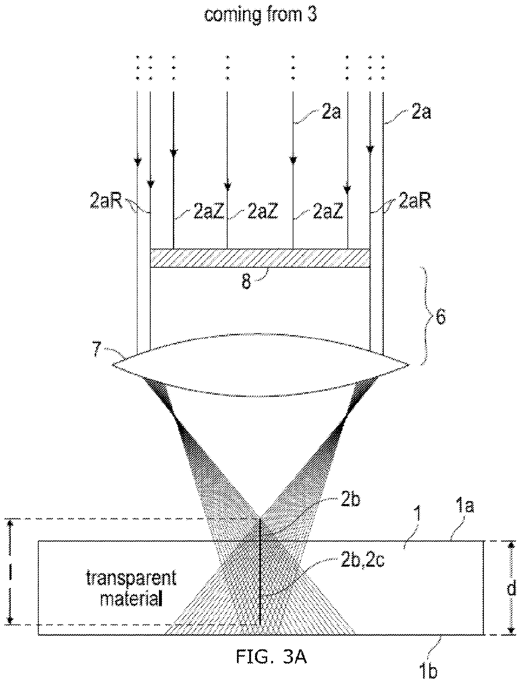

Turning to FIGS. 2A and 2B, a method of laser processing a material such as an ion-exchangeable glass workpiece includes focusing a pulsed laser beam 2 into a laser beam focal line 2b oriented along the beam propagation direction. As shown in FIG. 3A, laser 3 (not shown) emits laser beam 2, which has a portion 2a incident to the optical assembly 6. The optical assembly 6 turns the incident laser beam into an extensive laser beam focal line 2b on the output side over a defined expansion range along the beam direction (length 1 of the focal line). The planar substrate 1 is positioned in the beam path to at least partially overlap the laser beam focal line 2b of laser beam 2. The laser beam focal line is thus directed into the material. Reference 1a designates the surface of the planar substrate facing the optical assembly 6 or the laser, respectively, and reference 1b designates the reverse surface of substrate 1. The substrate or workpiece thickness (in this embodiment measured perpendicularly to the planes 1a and 1b, i.e., to the substrate plane) is labeled with d.

As FIG. 2A depicts, substrate 1 (or the glass composite workpiece) is aligned perpendicular to the longitudinal beam axis and thus behind the same focal line 2b produced by the optical assembly 6 (the substrate is perpendicular to the plane of the drawing). The focal line being oriented or aligned along the beam direction, the substrate is positioned relative to the focal line 2b in such a way that the focal line 2b starts before the surface 1a of the substrate and stops before the surface 1b of the substrate, i.e. still focal line 2b terminates within the substrate and does not extend beyond surface 1b. In the overlapping area of the laser beam focal line 2b with substrate 1, i.e. in the substrate material covered by focal line 2b, the extensive laser beam focal line 2b generates (assuming suitable laser intensity along the laser beam focal line 2b, which intensity is ensured by the focusing of laser beam 2 on a section of length 1, i.e. a line focus of length 1) an extensive section 2c (aligned along the longitudinal beam direction) along which an induced absorption is generated in the substrate material. The induced absorption produces defect line formation in the substrate material along section 2c. The defect line is a microscopic (e.g., >100 nm and <0.5 micron in diameter) elongated "hole (also called a perforation or a defect line) in a substantially transparent material, substrate, or workpiece generated by using a single high energy pulse burst of multiple laser pulses. Individual perforations can be created at rates of several hundred kilohertz (several hundred thousand perforations per second), for example. With relative motion between the source and the material, these perforations can be placed adjacent to one another (spatial separation varying from sub-micron to many microns as desired). This spatial separation (pitch) can be selected to facilitate separation of the material or workpiece. In some embodiments, the defect line is a "through hole", which is a hole or an open channel that extends from the top to the bottom of the substantially transparent material. The defect line formation is not only local, but over the entire length of the extensive section 2c of the induced absorption. The length of section 2c (which corresponds to the length of the overlapping of laser beam focal line 2b with substrate 1) is labeled with reference L. The average diameter or extent of the section of the induced absorption 2c (or the sections in the material of substrate 1 undergoing the defect line formation) is labeled with reference D. This average extent D basically corresponds to the average diameter $\delta$ of the laser beam focal line 2b, that is, an average spot diameter in a range of between about 0.1 micron and about 5 microns. Spot diameter D of a Bessel beam can be written as D = (2.4048 $\lambda$)/(2$\pi$B), where $\lambda$ is the laser beam wavelength and B is a function of the axicon angle.

As FIG. 2A shows, the substrate material (which is transparent to the wavelength $\lambda$ of laser beam 2) is heated due to the induced absorption along the focal line 2b arising from the nonlinear effects associated with the high intensity of the laser beam within focal line 2b. FIG. 2B illustrates that the heated substrate material will eventually expand so that a corresponding induced tension leads to micro-crack formation, with the tension being the highest at surface 1a.

Representative optical assemblies 6, which can be applied to generate the focal line 2b, as well as a representative optical setup, in which these optical assemblies can be applied, are described below. All assemblies or setups are based on the description above so that identical references are used for identical components or features or those which are equal in their function. Therefore only the differences are described below.

To ensure high quality (regarding breaking strength, geometric precision, roughness and avoidance of re-machining requirements) of the surface of the separated part along which separation occurs, the individual focal lines positioned on the substrate surface along the line of separation should be generated using the optical assembly described below (hereinafter, the optical assembly is alternatively also referred to as laser optics). The roughness of the separated surface (or cut edge) results particularly from the spot size or the spot diameter of the focal line. A roughness of a surface can be characterized, for example, by an Ra surface roughness statistic (roughness arithmetic average of absolute values of the heights of the sampled surface, which include the heights of bumps resulting from the spot diameter of the focal line). In order to achieve a small spot size of, for example, 0.5 micron to 2 microns in case of a given wavelength $\lambda$ of laser 3 (interaction with the material of substrate 1), certain requirements must usually be imposed on the numerical aperture of laser optics 6. These requirements are met by laser optics 6 described below.

In order to achieve the required numerical aperture, the optics must, on the one hand, dispose of the required opening for a given focal length, according to the known Abbé formulae (N.A. = n sin (theta), n: refractive index of the glass or composite workpiece to be processed, theta: half the aperture angle; and theta = arctan (D/2f); D: aperture, f: focal length). On the other hand, the laser beam must illuminate the optics up to the required aperture, which is typically achieved by means of beam widening using widening telescopes between the laser and focusing optics.

The spot size should not vary too strongly for the purpose of a uniform interaction along the focal line. This can, for example, be ensured (see the embodiment below) by illuminating the focusing optics only in a small, circular area so that the beam opening and thus the percentage of the numerical aperture only vary slightly.

According to FIG. 3A (section perpendicular to the substrate plane at the level of the central beam in the laser beam bundle of laser radiation 2; here, too, laser beam 2 is incident to the substrate plane at an incidence angle such that the focal line is preferably about 0° -i.e., o that the focal line 2b or the extensive section of the induced absorption 2c is parallel to the substrate normal), the laser radiation 2a emitted by laser 3 is first directed onto a circular aperture 8 which is completely opaque to the laser radiation used. Aperture 8 is oriented perpendicular to the longitudinal beam axis and is centered on the central beam of the depicted beam bundle 2a. The diameter of aperture 8 is selected in such a way that the beam bundles near the center of beam bundle 2a or the central beam (here labeled with 2aZ) hit the aperture and are completely absorbed by it. Only the beams in the outer perimeter range of beam bundle 2a (marginal rays, here labeled with 2aR) are not absorbed due to the reduced aperture size compared to the beam diameter, but pass aperture 8 laterally and hit the marginal areas of the focusing optic elements of the optical assembly 6, which, in this embodiment, is designed as a spherically cut, bi-convex lens 7.

Lens 7 is centered on the central beam and is designed as a non-corrected, bi-convex focusing lens in the form of a common, spherically cut lens. The spherical aberration of such a lens may be advantageous. As an alternative, aspheres or multi-lens systems deviating from ideally corrected systems, which do not form an ideal focal point but a distinct, elongated focal line of a defined length, can also be used (i.e., lenses or systems which do not have a single focal point). The zones of the lens thus focus along a focal line 2b, subject to the distance from the lens center. The diameter of aperture 8 across the beam direction is approximately 90% of the diameter of the beam bundle (defined by the distance required for the intensity of the beam to decrease to $1/e^2$ of the peak intensity) and approximately 75% of the diameter of the lens of the optical assembly 6. The focal line 2b of a non-aberration-corrected spherical lens 7 generated by blocking out the beam bundles in the center is thus used. FIG. 3A shows the section in one plane through the central beam, and the complete three-dimensional bundle can be seen when the depicted beams are rotated around the focal line 2b. One potential disadvantage of this type of focal line is that the conditions (spot size, laser intensity) may vary along the focal line (and thus along the desired depth in the material) and therefore the desired type of interaction (no melting, induced absorption, thermal-plastic deformation up to crack formation) may possibly occur only in selected portions of the focal line. This means in turn that possibly only a part of the incident laser light is absorbed by the substrate material in the desired way. In this way, the efficiency of the process (required average laser power for the desired separation speed) may be impaired, and the laser light may also be transmitted into undesired regions (parts or layers adherent to the substrate or the substrate holding fixture) and interact with them in an undesirable way (e.g. heating, diffusion, absorption, unwanted modification).

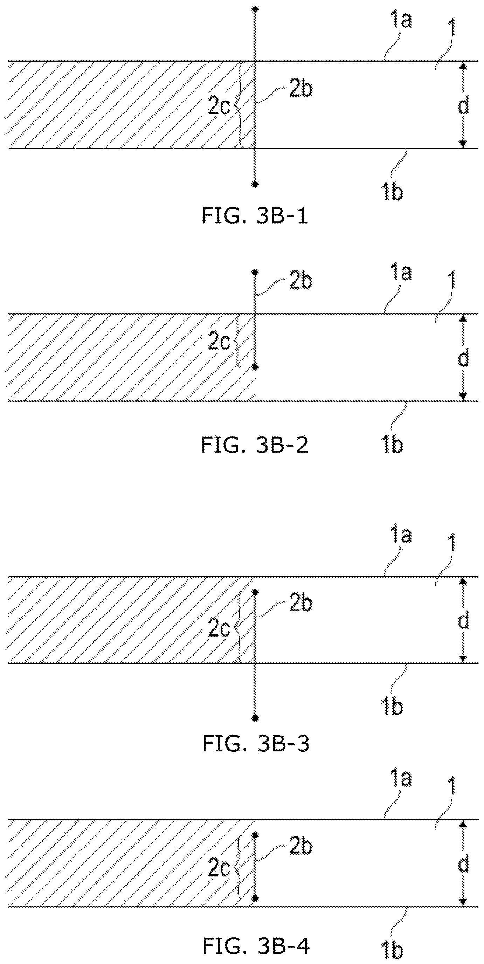

FIG. 3B-1-4 show (not only for the optical assembly in FIG. 3A, but basically also for any other applicable optical assembly 6) that the position of laser beam focal line 2b can be controlled by suitably positioning and/or aligning the optical assembly 6 relative to substrate 1 as well as by suitably selecting the parameters of the optical assembly 6. As FIG. 3B-1 illustrates, the length 1 of the focal line 2b can be adjusted in such a way that it exceeds the substrate or glass workpiece thickness d (here by factor 2). If substrate 1 is placed (viewed in longitudinal beam direction) centrally to focal line 2b, an extensive section of induced absorption 2c is generated over the entire substrate thickness. The laser beam focal line 2b can have a length 1 in a range of between about 0.01 mm and about 100 mm, for example. The laser beam focal line 2b can have a length 1 in a range of between about 0. 1 mm and about 100 mm or in a range of between about 0.1 mm and about 10 mm, for example. Various embodiments can be configured to have length 1 of about 0.1 mm, 0.5 mm to 5 mm, 0.2 mm, 0.3 mm, 0.4 mm, 0.5 mm, 0.7 mm, 1 mm, 1.2 mm, 1.5 mm 2 mm, 3 mm, 4 mm, or 5 mm, for example.

In the case shown in FIG. 3B-2, a focal line 2b of length 1 is generated which corresponds more or less to the substrate thickness d. Since substrate 1 is positioned relative to line 2b in such a way that line 2b starts at a point outside the substrate, the length L of the extensive section of induced absorption 2c (which extends here from the substrate surface to a defined substrate depth, but not to the reverse surface 1b) is smaller than the length 1 of focal line 2b. FIG. 3B-3 shows the case in which the substrate 1 (viewed along a direction perpendicular to the beam direction) is positioned above the starting point of focal line 2b so that, as in FIG. 3B-2, the length 1 of line 2b is greater than the length L of the section of induced absorption 2c in substrate 1. The focal line thus starts within the substrate and extends beyond the reverse surface 1b. FIG. 3B-4 shows the case in which the focal line length 1 is smaller than the substrate thickness d so that - in the case of a central positioning of the substrate relative to the focal line viewed in the direction of incidence - the focal line starts near the surface 1a within the substrate and ends near the surface 1b within the substrate (e.g. 1 = 0.75 · d).

It is particularly advantageous to position the focal line 2b in such a way that at least one of surfaces 1a, 1b is covered by the focal line, so that the section of induced absorption 2c starts at least on one surface of the substrate. In this way it is possible to achieve virtually ideal cuts while avoiding ablation, feathering and particulation at the surface.

FIG. 4 depicts another applicable optical assembly 6. The basic construction follows the one described in FIG. 3A so that only the differences are described below. The depicted optical assembly is based the use of optics with a non-spherical free surface in order to generate the focal line 2b, which is shaped in such a way that a focal line of defined length 1 is formed. For this purpose, aspheres can be used as optic elements of the optical assembly 6. In FIG. 4, for example, a so-called conical prism, also often referred to as axicon, is used. An axicon is a special, conically cut lens which forms a spot source on a line along the optical axis (or transforms a laser beam into a ring). The layout of such an axicon is generally known to one skilled in the art; the cone angle in the example is 10°. Other ranges of the axicon cone angle may also be utilized. The apex of the axicon labeled here with reference 9 is directed towards the incidence direction and centered on the beam center. Since the focal line 2b produced by the axicon 9 starts within its interior, substrate 1 (here aligned perpendicularly to the main beam axis) can be positioned in the beam path directly behind axicon 9. As FIG. 4 shows, it is also possible to shift substrate 1 along the beam direction due to the optical characteristics of the axicon while remaining within the range of focal line 2b. The section of the induced absorption 2c in the material of substrate 1 therefore extends over the entire substrate depth d.

However, the depicted layout is subject to the following restrictions: Since the region of focal line 2b formed by axicon 9 begins within axicon 9, a significant part of the laser energy is not focused into the section of induced absorption 2c of focal line 2b, which is located within the material, in the situation where there is a separation a between axicon 9 and the substrate or glass composite workpiece material. Furthermore, length 1 of focal line 2b is related to the beam diameter through the refractive indices and cone angles of axicon 9. This is why, in the case of relatively thin materials (several millimeters), the total focal line is much longer than the substrate or glass composite workpiece thickness, having the effect that much of the laser energy is not focused into the material.

For this reason, it may be desirable to use an optical assembly 6 that includes both an axicon and a focusing lens. FIG. 5A depicts such an optical assembly 6 in which a first optical element with a non-spherical free surface designed to form an extensive laser beam focal line 2b is positioned in the beam path of laser 3. In the case shown in FIG. 5A, this first optical element is an axicon 10 with a cone angle of 5°, which is positioned perpendicularly to the beam direction and centered on laser beam 3. The apex of the axicon is oriented towards the beam direction. A second, focusing optical element, here the plano-convex lens 11 (the curvature of which is oriented towards the axicon), is positioned in the beam direction at a distance z1 from the axicon 10. The distance z1, in this case approximately 300 mm, is selected in such a way that the laser radiation formed by axicon 10 is circularly incident on the outer radial portion of lens 11. Lens 11 focuses the circular radiation on the output side at a distance z2, in this case approximately 20 mm from lens 11, on a focal line 2b of a defined length, in this case 1.5 mm. The effective focal length of lens 11 is 25 mm in this embodiment. The circular transformation of the laser beam by axicon 10 is labeled with the reference SR.

FIG. 5B depicts the formation of the focal line 2b or the induced absorption 2c in the material of glass workpiece or substrate 1 according to FIG. 5A in detail. The optical characteristics of both elements 10, 11 as well as the positioning of them is selected in such a way that the length 1 of the focal line 2b in beam direction is exactly identical with the thickness d of substrate 1. Consequently, an exact positioning of substrate 1 along the beam direction is required in order to position the focal line 2b exactly between the two surfaces 1a and 1b of substrate 1, as shown in FIG. 5B.

It is therefore advantageous if the focal line is formed at a certain distance from the laser optics, and if the greater part of the laser radiation is focused up to a desired end of the focal line. As described, this can be achieved by illuminating a primarily focusing element 11 (lens) only circularly (annularly) over a particular outer radial region, which, on the one hand, serves to realize the required numerical aperture and thus the required spot size, and, on the other hand, however, the circle of diffusion diminishes in intensity after the required focal line 2b over a very short distance in the center of the spot, as a basically circular spot is formed. In this way, the defect line formation is stopped within a short distance in the required substrate depth. A combination of axicon 10 and focusing lens 11 meets this requirement. The axicon acts in two different ways: due to the axicon 10, a usually round laser spot is sent to the focusing lens 11 in the form of a ring, and the asphericity of axicon 10 has the effect that a focal line is formed beyond the focal plane of the lens instead of a focal point in the focal plane. The length 1 of focal line 2b can be adjusted via the beam diameter on the axicon. The numerical aperture along the focal line, on the other hand, can be adjusted via the distance z1 axicon-lens and via the cone angle of the axicon. In this way, the entire laser energy can be concentrated in the focal line.

If the defect line formation is intended to continue to the back side of the substrate, the circular (annular) illumination still has the advantage that (1) the laser power is used optimally in the sense that most of the laser light remains concentrated in the required length of the focal line and (2) it is possible to achieve a uniform spot size along the focal line - and thus a uniform separation of part from substrate along the focal line - due to the circularly illuminated zone in conjunction with the desired aberration set by means of the other optical functions.

Instead of the plano-convex lens depicted in FIG. 5A, it is also possible to use a focusing meniscus lens or another higher corrected focusing lens (asphere, multi-lens system).

In order to generate very short focal lines 2b using the combination of an axicon and a lens depicted in FIG. 5A, it would be necessary to select a very small beam diameter of the laser beam incident on the axicon. This has the practical disadvantage that the centering of the beam onto the apex of the axicon must be very precise and that the result is very sensitive to directional variations of the laser (beam drift stability). Furthermore, a tightly collimated laser beam is very divergent, i.e. due to the light deflection the beam bundle becomes blurred over short distances.

As shown in FIG. 6, both effects can be avoided by including another lens, a collimating lens 12, in the optical assembly 6. The additional positive lens 12 serves to adjust the circular illumination of focusing lens 11 very tightly. The focal length f of collimating lens 12 is selected in such a way that the desired circle diameter dr results from distance zla from the axicon to the collimating lens 12, which is equal to f. The desired width br of the ring can be adjusted via the distance zlb (collimating lens 12 to focusing lens 11). As a matter of pure geometry, the small width of the circular illumination leads to a short focal line. A minimum can be achieved at distance f.

The optical assembly 6 depicted in FIG. 6 is thus based on the one depicted in FIG. 5A so that only the differences are described below. The collimating lens 12, here also designed as a plano-convex lens (with its curvature towards the beam direction) is additionally placed centrally in the beam path between axicon 10 (with its apex towards the beam direction), on the one side, and the plano-convex lens 11, on the other side. The distance of collimating lens 12 from axicon 10 is referred to as zla, the distance of focusing lens 11 from collimating lens 12 as zlb, and the distance of the focal line 2b from the focusing lens 11 as z2 (always viewed in beam direction). As shown in FIG. 6, the circular radiation SR formed by axicon 10, which is incident divergently and under the circle diameter dr on the collimating lens 12, is adjusted to the required circle width br along the distance zlb for an at least approximately constant circle diameter dr at the focusing lens 11. In the case shown, a very short focal line 2b is intended to be generated so that the circle width br of approximately 4 mm at lens 12 is reduced to approximately 0.5 mm at lens 11 due to the focusing properties of lens 12 (circle diameter dr is 22 mm in the example).

In the depicted example, it is possible to achieve a length of the focal line 1 of less than 0.5 mm using a typical laser beam diameter of 2 mm, a focusing lens 11 with a focal length f = 25 mm, a collimating lens with a focal length f = 150 mm, and choosing distances Z1a = Z1b = 140 mm and Z2 = 15 mm.

For example, for the purpose of cutting Gorilla glass compositions, a process was developed that uses a picosecond pulsed laser (e.g., a 1064 nm picosecond pulsed laser which produces bursts of multiple pulses) in combination with line-focus beam forming optics to create lines of damage (defect lines) in the glass composition. A glass composition with up to 0.7 mm thickness was positioned so that it was within the region of the focal line produced by the optics. With a focal line about 1 mm in length, and a picosecond laser that produces output power of about 24 W or more at a repetition rate of 200 kHz (about 120 microJoules/burst) measured at the glass composition, the optical intensities in the focal line region can easily be high enough to create non-linear absorption in the glass composition. The pulsed laser beam can have an average laser burst energy measured, at the material, greater than 40 micro Joules per mm thickness of material. The average laser pulse burst energy used can be as high as 2000 $\mu$J per mm of thickness of material, for example 40-1500 $\mu$J/mm, with 175-1500 $\mu$J/mm being preferable, and 200 to 900 $\mu$J/mm being even more preferable because the energy density is strong enough to make a thorough damage track through the glass, while minimizing the extent of microcracking orthogonal to the perforated line or cut edge. In some exemplary embodiments the laser burst energy is 250-600 $\mu$J/mm. This "average pulse burst laser energy" per mm can also be referred to as an average, per-burst, linear energy density, or an average energy per laser pulse per mm thickness of material. A region of damaged, ablated, vaporized, or otherwise modified material within the glass composition was created that approximately followed the linear region of high optical intensity created by the laser beam focal line.

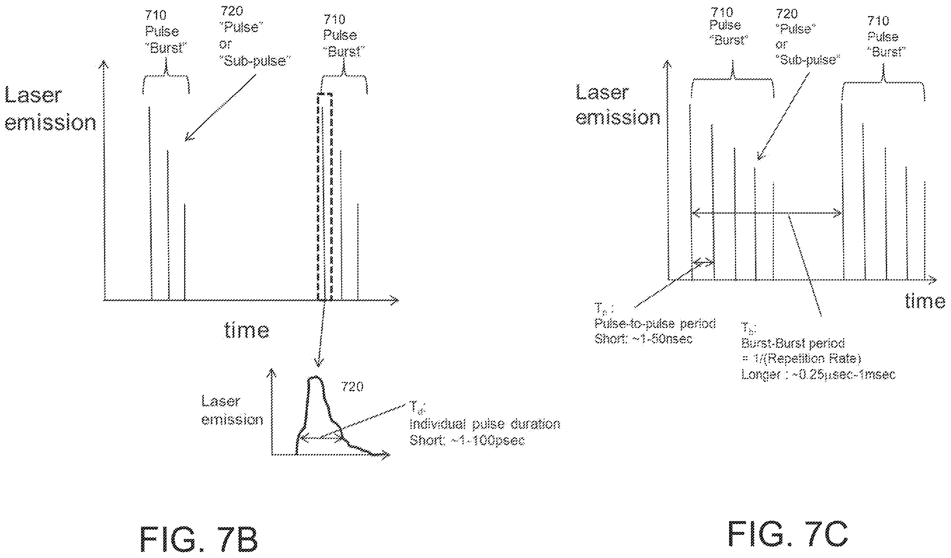

Note that the typical operation of such a picosecond laser creates a pulse bursts or "burst" of pulses. This is depicted in FIGs. 7A-7C. Each "burst" may contain multiple pulses (such as at least 2 pulses, at least 3 pulses, at least 4 pulses, at least 5 pulses, or more) of very short duration ($\sim$10 psec). More specifically, as illustrated in **FIG. 7B and 7C**, according to the embodiments described herein the picosecond laser creates a "burst" 710 of pulses 720, also referred to herein as a "pulse burst", Each "burst" 710 contains multiple pulses 720 (such as 2 pulses, 3 pulses, 4 pulses, 5 pulses, 10 pulses, 15 pulses, 20 pulses, or more) of very short duration $T_d$ up to 100 psec (for example, 0.1 psec, 5 psec, 10 psec, 15 psec, 18 psec, 20 psec, 22 psec, 25 psec, 30 psec, 50 psec, 75 psec, or therebetween). These individual pulses 720 within a single burst 710 can also be termed "sub-pulses," which simply denotes the fact that they occur within a single burst of pulses. The energy or intensity of each laser pulse 720 within the pulse burst may not be equal to that of other pulses within the pulse bust, and the intensity distribution of the multiple pulses within a pulse burst 710 often follows an exponential decay in time governed by the laser design. Preferably, each pulse 720 within the pulse burst 710 of the exemplary embodiments described herein are separated in time from the subsequent pulse in the burst by a duration $T_p$ from 1 nsec to 50 nsec (e.g., 10-50 ns, or 10-50, or 10-30 nsec, with the time often governed by the laser cavity design. For a given laser, the time separation $T_p$ between each pulses (pulse-to- pulse separation) within a pulse burst 710 is relatively uniform ($\pm$10%). For example, in some embodiments, each individual pulse is separated in time from the subsequent pulse by approximately 20 nsec (50 MHz). For example, for a laser that produces pulse separation $T_p$ of about 20 nsec, the pulse to pulse separation $T_p$ within a burst is maintained within about $\pm$10%, or is about $\pm$2 nsec. The time between each "burst" (i.e., time separation $T_b$ between bursts) will be much longer (e.g., 0.25 $\leq T_b \leq$ 1000 microseconds, for example 1-10 microseconds, or 3-8 microseconds). For example in some of the exemplary embodiments of the laser described herein it is around 5 microseconds for a laser repetition rate or frequency of about 200 kHz. The laser repetition rate is also referred to as burst repetition frequency herein, and is defined as the time between the first pulse in a burst to the first pulse in the subsequent burst. In other embodiments, the burst repetition frequency is in a range of between about 1 kHz and about 4 MHz. More preferably, the laser repetition rates can be, for example, in a range of between about 10 kHz and 650 kHz. The time $T_b$ between the first pulse in each burst to the first pulse in the subsequent burst may be 0.25 microsecond (4MHz repetition rate) to 1000 microseconds (1kHz burst repetition rate), for example 0.5 microseconds (2MHz burst repetition rate) to 40 microseconds (25kHz burst repetition rate), or 2 microseconds (500kHz burst repetition rate) to 20 microseconds (50kHz burst repetition rate). The exact timings, pulse durations, and repetition rates can vary depending on the laser design, but short pulses ($T_d$ <20 psec and preferably $T_d \leq 15$ psec) of high intensity have been shown to work particularly well.

The required energy to modify the material can be described in terms of the burst energy - the energy contained within a burst (each pulse burst 710 contains a series of pulses 720), or in terms of the energy contained within a single laser pulse (many of which may comprise a burst). For these applications, the energy per pulse burst can be from 25-750 μJ, more preferably 50-500 μJ, or 50-250 μJ. In some embodiments the energy per pulse burst is 100-250 μJ. The energy of an individual pulse within the burst will be less, and the exact individual laser pulse energy will depend on the number of pulses 720 within the burst 710 and the rate of decay (e.g., exponential decay rate) of the laser pulses with time as shown in FIGs.7B **and** 7C. For example, for a constant energy/burst, if a pulse burst contains 10 individual laser pulses 720, then each individual laser pulse 720 will contain less energy than if the same pulse burst 710 had only 2 individual laser pulses.

The use of laser capable of generating such pulse bursts is advantageous for cutting or modifying transparent materials, for example glass. In contrast with the use of single pulses spaced apart in time by the repetition rate of the laser, the use of a pulse burst sequence that spreads the laser energy over a rapid sequence of pulses within the burst 710) allows access to larger timescales of high intensity interaction with the material than is possible with single-pulse lasers. While a single-pulse can be expanded in time, as this is done the intensity within the pulse must drop as roughly one over the pulse width. Hence, if a 10 psec single pulse is expanded to a 10 nsec pulse, the intensity drop by roughly three orders of magnitude. Such a reduction can reduce the optical intensity to the point where non-linear absorption is no longer significant, and light material interaction is no longer strong enough to allow for cutting. In contrast, with a pulse burst laser, the intensity during each sub-pulse 720 (or a pulse within 720 the burst 710) can remain very high - for example three 10 psec pulses 720 spaced apart in time by approximately 10 nsec still allows the intensity within each pulse to be approximately three times higher than that of a single 10 psec pulse, while the laser is allowed to interact with the material over a timescale that is now three orders of magnitude larger. This adjustment of multiple pulses 720 within a burst thus allows manipulation of timescale of the laser-material interaction in ways that can facilitate greater or lesser light interaction with a pre-existing plasma plume, greater or lesser light-material interaction with atoms and molecules that have been pre-excited by an initial or previous laser pulse, and greater or lesser heating effects within the material that can promote the controlled growth of microcracks. The required amount of burst energy to modify the material will depend on the substrate material composition and the length of the line focus used to interact with the substrate. The longer the interaction region, the more the energy is spread out, and the higher the burst energy that will be required.

The optical method of forming the line focus can take multiple forms, using donut shaped laser beams and spherical lenses, axicon lenses, diffractive elements, or other methods to form the linear region of high intensity (see reference 1). The type of laser (picosecond, femtosecond, etc.) and wavelength (IR, green, UV, etc.) can also be varied, as long as sufficient optical intensities are reached to create breakdown of the substrate or glass material workpiece through nonlinear optical effects. An essential element is that this long line focus is created, which allows very long damage tracks or holes to be created in the material with a single laser burst, in contrast to traditional Gaussian-like laser beams, which diverge so rapidly that only very short damage tracks can be created, and hence multiple scans at different focal locations must be made to sufficiently perforate a substrate.

Hole or Damage Track Formation

These holes or damage tracks generally take the form of holes with interior dimensions of about 0.1 to 2 microns, for example of about 0.5-1.5 microns. Preferably the holes are very small (single microns or less) in dimension. For example, in some embodiments, the holes have interior dimensions of about 0.2 to 0.7 microns, or 0.3 to 0.6 microns.

Scanning electron micrograph images of such features are shown in FIG. 8. The holes can perforate the entire thickness of the material, but may or may not be a continuous opening throughout the depth of the material. FIG. 9 shows an example of such tracks perforating the entire thickness of a piece of 700 micron thick Corning code 2320 glass. The cut was made with a single pass of the laser beam across the substrate at 200mm/sec. The image shows that the perforations traverse the full thickness of the glass. The perforations or damage tracks are observed through the side of a cleaved edge. The tracks through the material are not necessarily through holes - there are often regions of glass that plug the holes, but they are generally small in size, on the order of microns.

It is also possible to perforate stacked sheets of glass. In this case, the focal line length needs to be longer than the stack height.

The lateral spacing (pitch or periodicity) between the holes or defect lines (or damage tracks, or perforations) is determined by the pulse rate of the laser and by translation speed of the substrate as the substrate is translated underneath the focused laser beam. Only a single picosecond laser pulse burst is usually necessary to form an entire hole, but multiple pulses may be used if desired. To form holes at different pitches, the laser can be triggered to fire at longer or shorter intervals. The periodicity between adjacent defect lines can be 0.1 and 20 microns. For example between 0.5 micron and 20 microns, For example, the periodicity is between 0.5 and 15 microns, or between 3 and 10 microns, or between 5 and 8 microns, or between 0.5 micron and 3.0 microns. Even more preferably, the periodicity (or pitch or lateral spacing) between adjacent defect lines can be between about 3 microns and about 12 microns, for example. For example, in some embodiments that entail the cutting of non-strengthened (pre-IOX) ion-exchangeable glasses, it is preferable that the distance between adjacent defect lines (pitch distance) be between 3 and 5 microns. In contrast, in some embodiments, if those same glasses are ion exchanged to central tension (CT) levels above 40MPa, the preferred distance between adjacent defect lines is between 5 and 8 microns. This can be understood since in post-IOX materials the stress is greater and the perforations of damage tracks will create larger cracks which can propagate between defect lines made at larger pitches than in the case of pre-IOX materials. On the other hand, to prevent too much sub-surface damage of the cut edge, which can reduce the edge strength of the resulting parts, it is generally desirable to make the pitch between defect lines as large as is possible while still allowing the material to easily be separated. Hence larger pitches are desired if the material will still separate, as larger pitches mean less energy is deposited per area in a material, resulting in less damage to the final part edges.

However, in the case of pre-IOX glasses, the pitch of the defect lines often has to be smaller to allow the cracks to join between the perforations, providing the opportunity to separate the parts with as little applied external stress as possible. This is particularly important if a secondary separation step such as the use of a $CO_2$ laser is used. The more thorough the crack network made between the defect lines, the less $CO_2$ energy will be needed to induce separation. This allows for faster $CO_2$ laser traversal speeds across the perforated contours, and hence faster production processes.

For cutting operations, the laser triggering generally is synchronized with the stage driven motion of the workpiece beneath the beam, so laser pulses are triggered at a fixed interval, such as, for example, every 1 micron, or every 5 microns. Distance, or periodicity, between adjacent defect lines along the direction of the fault line can be, for example, greater than 0.1 micron and less than or equal to about 20 microns in some embodiments. More preferably, in some embodiments, the spacing is between 1 micron and 15.0 microns. Even more preferably, the spacing can be between 3 micron and 8 microns. The exact spacing is determined by the material properties that facilitate crack propagation from perforated hole to perforated hole, given the stress level in the substrate. However, in contrast to cutting a substrate, it is also possible to use the same method to only perforate the material. In the methods described herein, the holes or defect lines can be separated by larger spacings (e.g., a 7 micron pitch or greater).

The laser power and lens focal length (which determines the focal line length and hence power density) are particularly important parameters to ensure full penetration of the glass and low micro-cracking.

In general, the higher the available laser power, the faster the material can be cut with the above process. A cut speed (or cutting speed) is the rate the laser beam moves relative to the surface of the transparent material (e.g., glass) while creating multiple holes or modified regions). High cut speeds, such as at least 250 mm/sec, at least 300 mm/sec, at least 350 mm/sec, 400 mm/sec, 500 mm/sec, 1 m/sec, 1.2 m/sec, 1.5 m/sec, or 2 m/sec, or even 3.4 m/sec to 4 m/sec are often desired in order to minimize capital investment for manufacturing. The laser power is equal to the burst energy multiplied by the burst repetition frequency (rate) of the laser. In general, to cut such glass materials at high cutting speeds, the damage tracks are spaced apart by 1-25 microns, preferably 3 microns or larger- for example, in some embodiments the spacing is 3-12 microns, for example, 5-10 microns.

For example, to achieve a linear cutting speed of 300 mm/sec, 3 micron hole pitch corresponds to a burst-pulsed laser with at least 100kHz repetition rate . For a 600 mm/sec cutting speed, a 3 micron pitch corresponds to a burst-pulsed laser with at least 200kHz burst repetition rate. For a pulse burst laser that produces at least 40 μJ/burst at 200kHz, this is equivalent to a laser power of 8 Watts. Higher cut speeds therefore require even higher laser powers.

For example 0.4 m/sec cut speed at 3 μm pitch and 40 μJ/burst would require at least a 5 Watt laser 0.5 m/sec cut speed at 3 μm pitch and 40 μJ/burst would require at least a 6 Watt laser. Thus, preferably the laser power of the pulse burst ps laser is 6 watts or higher, more preferably at least 8 Watts or higher, and even more preferably at least 10W or higher. For example 0.4 m/sec cut speed at 4 μm pitch and 100 μJ/burst would require at least a 10 Watt laser 0.5 m/sec cut speed at 4 μm pitch and 100 μJ/burst would require at least a 12 Watt laser. For example 1m/sec cut speed at 3 μm pitch and 40 μJ/burst would require at least a 13 Watt laser. For example 1m/sec cut speed at 3 μm pitch and 40 μJ/burst would require at least a 13 Watt laser. Also for example 1m/sec cut speed at 4 μm pitch and 400 μJ/burst would require at least a 100 Watt laser. However, it should be noted that raising the laser pulse energy or making the damage tracks at a closer pitch are not conditions that always make the substrate material separate better or with improved edge quality. Too dense a pitch (for example <3μm, or <2μm) between damage tracks can actually inhibit the formation of nearby subsequent damage tracks, and often can inhibit the separation of the material around the perforated contour and may also result in increased unwanted micro cracking within the glass. Too long a pitch (>20 μm) may result in "uncontrolled microcracking" - i.e., where instead of propagating from hole to hole the microcracks propagate along a different path, and cause the glass to crack in a different (undesirable) direction. This will ultimately lower the strength of the separated glass part, since the residual microcracks will acts as flaws which weaken the glass. Too high a burst energy (e.g., >2500 μJ/burst) can cause "healing" or re-melting of already formed microcracks of adjacent damage tracks, which will inhibit separation of the glass. Also, using a burst energy that is too high can cause formation of microcracks that are extremely large and create flaws which reduce the edge strength of the parts after separation. Too low a burst energy (<40 μJ/burst) may result in no appreciable damage track formed within the glass, and hence very high separation strength or complete inability to separate along the perforated contour. Hence the optimal pitch between damage tracks and the exact burst energy is material dependent.

Typical exemplary cutting rates (speeds) enabled by this process are, for example 300 mm/sec or higher. In some embodiments described herein the cutting rates are at least 400 mm/sec, for example 500 mm/sec to 2000 mm/sec, or higher. In some embodiments the (burse pulse) ps laser produces defect lines with periodicity between 0.5 microns and 13 microns, e.g. between 0.5 and 10 microns, and in some embodiments 3-7 microns. In some embodiments the pulsed laser has laser power of 10W-100 W and the material and/or the laser beam are translated relative to one another at a rate of at least 0.25 to 0.35 m/sec, or 0.4 m/sec to 5 m/sec. Preferably, each pulse burst of the pulsed laser beam has an average laser energy measured at the workpiece greater than 40 microJoules per burst mm thickness of workpiece. Preferably, each pulse burst of the pulsed laser beam has an average laser energy measured at the workpiece less than 2000 micro Joules per burst per mm thickness of workpiece, and preferably less than about 1000 micro Joules per burst per mm, and in some embodiments less than 7500 microJoules per burst per mm thickness of workpiece.

For example, for the cutting of 0.7 mm thick non-ion exchanged Corning code 2319 or code 2320 Gorilla glass, it is observed that pitches of 3-7 microns can work well, with pulse burst energies of about 150-250 μJ/burst, and, the numbers of pulses per pulse burst that range from 2-15, more preferably the number of pulses per burst ranging from 2-10, with pitches of 3-5 microns being preferred for pre-IOX glass and pitches of 5-8 microns being preferred for post-IOX glass.

At 1 m/sec cut speeds, the cutting of such code 2319 or 2320 Gorilla®, glass typically requires laser powers of 15- 84 Watts, with 20-45 Watts often sufficient. In general, across a variety of glass and other transparent materials, applicants discovered that laser powers between 10 and 100W are required to achieve cutting speeds from 0.2-1m/sec, with laser powers of 25-60 Watts being sufficient (and optimum) for many glasses. For cutting speeds of 0.4 m to 5 m/sec, laser powers should preferably be 10 W-150W, with burst energy of 40-750 μJ/burst, 2-25 bursts per pulse (depending on the material that is cut), and hole separation (or pitch) of 3 to 15 μm, or 3-10 μm. The use of picosecond pulse burst lasers would be preferable for these cutting speeds because they generate high power and the required number of pulses per burst. Thus, according to some exemplary embodiments, the pulsed laser produces 10-100W of power, for example 25 W to 60 Watts, and produces pulse bursts of at least 2 -25 pulses per burst and the distance between the defect lines is 2-10 microns; and the laser beam and the workpiece are translated relative to one another at a rate of at least 0.4 m/sec relative, for example 0.5m/sec to 5m/sec, or faster.

Where a micro-crack around the hole of the penetrated defect line is oriented toward the next nearest hole, this helps the glass cutting in a sense that the crack propagation from one hole to the next nearest one in the direction of the cut is additionally enhanced by micro-cracks along the line of the cut. In such cases, a larger pitch (for example 3 to 50 microns, such as 3 to 20 microns) between the holes or defect lines is preferred for a full glass separation. Alternatively, where micro-cracks are not formed or are not oriented toward and adjacent defect line, a smaller pitch (e.g. 0.1 to 3 microns) between the holes (or defect lines) is preferred for a full glass separation.

Separation

If the substrate has sufficient stress (e.g. with ion exchanged glass), then the part will spontaneously crack and separate along the path of perforated damage traced out by the laser process. FIG. 9 shows the distinction between the stress profiles in non-ion exchanged samples of such glasses and ion-exchanged samples. The level of internal stress in such a glass sheet can be approximated by:

$$CT \cong \frac{CS \times DOL}{thickness - 2 \times DOL}$$

where CT is the central tension in megapascals (MPa), DOL is the depth-of-layer of the ion-exchanged region, CS is the compressive stress (in units of MPa) in the ion-exchanged layer, and the thickness used is the thickness of the glass sheet. This describes strengthened glass materials, such as Corning code 2318, 2319, 2320 that have been ion-exchanged to central tension levels ranging from 20 to 110 MPa. In general, the higher the central tension of the glass, the more readily it will separate after the picosecond laser process.

However, if there is not sufficient stress within the substrate, then the picosecond laser will simply form damage tracks in the piece and the substrate will remain intact. In this case, mechanical bending force may be applied to separate the pieces along the perforated lines. Or, often more preferably, thermal stress can be applied by use of a heat source like a $CO_2$ laser. The $CO_2$ laser beam (provided in a subsequent pass by $CO_2$ laser along or near the perforation line formed by a ps laser) is absorbed by the glass, and when traced across the perforated lines, it creates localized thermal stress which will cause the glass to separate along the perforations.

$CO_2$ laser separation is achieved, for example, with a defocused continuous wave (cw) laser emitting at 10.6 microns and with power adjusted by controlling its duty cycle. Focus change (i.e., extent of defocusing up to and including focused spot size) is used to vary the induced thermal stress by varying the spot size. Defocused laser beams include those laser beams that produce a spot size larger than a minimum, diffraction-limited spot size on the order of the size of the laser wavelength. For example, spot sizes of 1 to 20 mm, for example 1 to 12 mm, 3 to 8 mm, or about 7 mm, 2 mm, and 20 mm can be used for $CO_2$ lasers, for example, with a $CO_2$ 10.6 $\mu$m laser. Other lasers, whose emission wavelength is also absorbed by the glass, may also be used, for example lasers with wavelengths emitting in the 9-11 micron range. In such cases $CO_2$ laser with power levels between 100 and 400 Watts may be used, and the beam may be scanned at speeds of 50-1000 mm/sec along or adjacent to the defect lines, which creates sufficient thermal stress to induce separation. The exact power levels, spot sizes, and scanning speeds chosen within the specified ranges may depend on the material use, its thickness, coefficient of thermal expansion (CTE), elastic modulus, since all of these factors influence the amount of thermal stress imparted by a specific rate of energy deposition at a given spatial location. If the spot size is too small (i.e. <1 mm), or the laser power is too high (>400W), or the scanning speed is too slow (less than 1 mm/sec), the glass may be over heated, creating ablation, melting or thermally generated cracks in the glass, which are undesirable, as they will reduce the edge strength of the separated parts. Preferably the $CO_2$ laser beam scanning speed is >50 mm/sec to induce efficient and reliable part separation. However, if the spot size is too large (>20 mm), or the laser power is too low (< 10W, or in some cases <30W), or the scanning speed is too high (>1000 mm/sec), insufficient heating occurs which results in too low a thermal stress to induce reliable part separation. For example, in some embodiments, a $CO_2$ laser power of 80 Watts may be used, with a spot diameter at the glass surface of approximately 2 mm, and a scanning speed of 233 mm/sec to induce part separation for pre-IOX 0.7 mm thick Corning code 2318 glass that has been perforated with the above mentioned psec laser. The exact power levels, spot sizes, and scanning speeds may depend on the material use, its thickness, coefficient of thermal expansion (CTE), elastic modulus, since all of these factors influence the amount of thermal stress imparted by a specific rate of energy deposition at a given spatial location. For example a thicker Corning 2318 glass substrate may require more $CO_2$ laser thermal energy per unit time to separate than a thinner Corning 2318 substrate, or a glass with a lower CTE may require more $CO_2$ laser thermal energy to separate than a glass with a lower CTE. Separation along the perforated line will occur very quickly (less than 1 second) after $CO_2$ spot passes a given location, for example within 100 milliseconds, within 50 milliseconds, or within 25 milliseconds.

Using an optical delivery system that creates a filament length of ~2.1 mm, and an ~10 psec pulse width 1064 nm laser, the following exemplary picosecond laser conditions can readily be used to perforate these glasses after ion-exchange:

Table 1. Picosecond Laser Conditions

| Glass Code | Thickness (mm) | IOX level | Laser Burst energy (microJoules) | Pulses/ Burst | Hole Pitch (microns) |
|---|---|---|---|---|---|
| 2320, 2318 | 0.7 | None → CT 60 MPa | 100-250 | 2-5 | 3-8 |
| 2320 | 0.4 | CT 80→104 MPa | 125-150 | 2-3 | 6-10 |

The above conditions will separate such glasses, but are not intended to represent the full range of all possible process conditions that may be used. Preferably, the laser is a pulse burst laser which allows for control of the energy deposition with time by adjusting the number of pulses within a given burst.

The following exemplary $CO_2$ laser conditions can readily be used to create thermal stress in order to separate the unstrengthened (pre-ion exchange) glasses after there are perforated with the picosecond processes listed above:

Table 2. $CO_2$ Laser Conditions

| Glass Code | Thickness (mm) | | Laser Repetition rate (kHz) | Laser Pulse width (microsecond s) | Laser Avg. Power at glass (Watts) | Spot size at glass (mm) | Beam Traverse Speed (m/ minute) |
|---|---|---|---|---|---|---|---|
| 2320, 2318 | 0.7 | pre-IOX | 20 | 20 | 80 | 2 | 14 |

The above conditions generate a laser power density at the glass of about 25Watts/mm$^2$, which is translated along the perforation line at 14m/minute (233mm/sec) to cause sufficient thermal stress to fully separate along the perforations.

FIG. 10 shows an example comparison of the internal stress level and stress profiles between pre-ion and post ion exchange sample of Gorilla® glass. FIG. 10 does not represent all possible levels of tension for all levels of ion-exchange, compositions, or glass thicknesses, but is only an example.

Edge quality

FIG. 12 shows the results of subsurface damage (SSD) measurements made on a series of 0.7 mm thick Corning glass code 2320 parts, both before and after ion-exchange. SSD values correspond to defects and microcracks that were created by the laser method and lays hidden under that textured surface. Confocal microscopy of a certain edge area was the method used to access how deep the subsurface defects penetrate into the volume of the glass under the surface. SSD is measured by looking through the exposed (cut) edge of the glass with a confocal microscope, and recording how far down into the glass part the microscope focus must be adjusted until the light scattering from cracked or fractured glass disappears. One can see the extent of SSD is approximately 60+/-15 microns. The values measured for the Corning glass code 2320 samples are relatively low and consistent for almost all of the glasses cut by this technique and discussed herein. There are often many thousands of microcracks, so typically only the largest microcracks are measured. This process is typically repeated on about 5 locations of a cut edge. Although the microcracks are roughly perpendicular to the cut surface, any cracks that are directly perpendicular to the cut surface may not be detected by this method.

This is significantly better than the SSD that can be achieved with mechanical score and break methods (highly variable and uncontrolled, SSD up to 200 microns), $CO_2$ laser methods (highly variable and uncontrolled, up to 200 microns), many nanosecond pulsed laser processes (-150 microns), etc. Such a low level of SSD (mean of 58 microns as-cut), and as importantly such a consistent and dependable low level of SSD (all values <75 microns) means that the amount of time spent to later grind and polish the glass edge can be minimized, and indeed can obviate the need for complete process steps such as coarse grinding. Such SSD values are lower than those produced by other cutting techniques, including other laser methods, and this points towards the possibility of minimizing post processing after cutting to obtain a strong edge with minimum defects, and to lower production costs.

FIG. 13 shows surface roughness data measured for the same set of samples of the Gorilla® glass code 2320. The values were measured using an optical interferometer. As mentioned before, the edges shown in FIG. 9 and FIG. 11 have very homogeneous and apparently smooth texture. This is quantified by the Ra statistic, which is a measure of the average of the deviation of the surface height from the mean, defined by

$$R_a = \frac{1}{n}\sum_{i=1}^{n}|y_i|$$

where $y_i$ represents height measurements taken at different locations within a surface. The mean of about 400nm, and standard deviation of always <50nm, indicate that a consistently low roughness surface has been generated, with no pieces of adhered glass that would be present if the separation were inconsistent or erratic.

Edge Strength

When the above conditions are used, the cut edges look as shown in FIG. 9 and FIG. 11. The edge is homogeneously textured from top to bottom, which reflects the consistency of the laser process in creating the damage tracks. This visual evaluation of the edge can be translated or quantified by several measurable parameters, such as, subsurface damage, surface roughness, module of rupture (MOR), impact resistance, etc. Note that in the case of FIG. 11, this high CT (CT>100 MPa) material is extremely difficult to cut with other methods. Other methods may be able to cut some parts out of a sheet of this glass, but generally at low yield and also with extreme difficulty in getting the cut to follow radius contours. But the full body perforation created by this line-focus picosecond laser technique allows one to robustly guide the crack propagation in this glass, such that the perforated contours are followed by the crack. Tight radius contours are easily achieved (r<1 mm), parts are high yield, and no cracking propagates into undesired sections of the part.

One of the tests employed in the industry to quantify the edge strength is the four-point bend strength test. This test measures the cumulative probability of failure of an edge for a given loading stress. It is displayed in Weibull plots that provides parameters such as B10 (load under which probability of failure is lower than 10%), slope (which is an indication of the flaw population distribution in size and depth) and if the slope varies, it can also indicate that failure is a composition of different sources or types of defects. For example, it is not uncommon to find different strength curves for separated glass samples when they are loaded under the supporting bars with one surface pointing up or down. In mechanical scribed and broken glasses, the surface that was scribed results in an edge that have more and larger defects than the bottom edge of the opposite surface. This is noticeable in Weibull plots by two curves that are considerably distinct and separated, indicating that one edge is stronger than the other. Likewise, in laser separated glass samples it is also common to observe the same behavior, with the laser incidence side being generally weaker than the opposite side.

FIGS. 14 and 15 show the measured edge strength of the "as-cut" chemically strengthened 0.4 mm and 0.7 mm thick Gorilla® glass code 2320, respectively. The Weibull plot of FIG. 14 shows edge strength for glass with CT~100 MPa, while FIG. 15 shows edge strength for glass with CT~50 MPa. The curves labeled laser in tension, or LIT, refer to the case where the edge that was created from the laser entrance surface was tested in tension. Any defects on that edge will be increasingly pulled apart until failure. The other curves labeled laser in compression, or LIC, refer to the opposite case when the laser exposed edge is under compression stress. Note that the strength of the top and bottom edges is nearly identical in both plots, which indicates that the laser separation process creates virtually identical edge quality on both sides, independent of CT levels or thickness. This feature is very distinctive of the disclosed laser separation method and not commonly attainable with other laser processes, which invariably have a weaker LIT edge. The other main information of the plotted curves is their similar B10 values and their relatively steep and uniform slope, which indicates that the flaw size is relatively small and its population distribution is very narrow (almost all created defects are of the same size), with the majority of the distribution falling within +/-30MPa of the mean.

Process Robustness Against Fly Height Variation.

FIG. 16 displays the Weibull plot curves for edge strength of laser cut samples of 0.7 mm thick strengthened Gorilla® glass code 2320 (CS 793/DOL 42) (CT = 54 MPa) using the line-focus method. These curves were obtained by using different set of parts of the same glass code and thickness that were cut at different relative position of top surface of the samples along the line focus extension. These cut samples were then submitted to 4 point bend strength measurements that are displayed in this plot for each "height". The observation that is very impressive is that the edge strength (125-155MPa for B10) is nearly identical for a "focus" change over a 1.1 mm range. Expressing this value in another way, it indicates the tolerance that the cutting process can have to changes in glass flatness, thickness, bow, distortions, or vibrations, for example. The extended fly-height processing window allows the process to operate without the need of active focus compensation required by other laser cutting techniques that are sensitive to focus or glass position variation.

Robustness to Ion-Exchange Process Variation

The chemical strengthening process can have variability, and glass sheets that are nominally ion-exchanged only to within a given "window", where the depth of layer (DOL) may fall within a certain range of values. In turn, this means that the compressive stress (CS) caused by the layer varies, and the overall central tension (CT) will vary. Hence sheets may be supplied to a cutting process where the CT is only characterized to being within some nominal range. Ideally, one desires a cutting process with a wide process window, so that it does not need to be tuned to each incoming glass lot, which saves measurement and characterization time, setup time, and ultimately leads to lower cost.

FIG. 17 details an experiment performed where the picosecond laser process conditions were held constant (135 microJoules, 2 pulses/burst, 8 micron pitch, ~2mm long focal line) and parts cut out of 0.4mm thick 2320 glass after ion exchange. This made perforations that went through entire thickness of the glass parts. No $CO_2$ process was necessary, since this was high central tension glass, and would hence automatically separate. Five different ion exchange conditions (A-E) were tested, varying both the DOL and the CS, which in combination cause the central tension of the sheets to vary from approximately 78.5MPa to 103.1MPa.

A series of 44x60mm parts were cut out the 200x300mm sheets. This would create about 18 parts from each sheet, and 10 sheets were cut for each ion exchange condition, with the exception of the last condition (E), where only 6 sheets were used. The yield, as measured by both successful separation of the part edges and by a lack of breakage of the glass sheet, was very high for all 5 conditions, ranging from 96% to 100% of the edge separating, and with broken parts occurring for only one sheet of one ion exchange condition. This shows that the laser cut process is both remarkably insensitive to the incoming glass ion exchange condition, and that even for this extremely high CT glass (CT>80MPa), high yield is achieved, which is extremely difficult with other cutting methods.

Higher Edge Strength - With Post-Cut Processes

Despite the virtues of the laser cutting process discussed herein that are confirmed by the measured low SSD and Ra values and also by the Weibull plots, the required edge strength performance commonly adopted for applications such as, displays in consumer electronics devices and LCD TVs, OLED TVs and so on, is commonly much higher (typically > 500 MPa, for 4 point bend strength). Presented below are methods and results that can increase the edge strength to meet the required performance.

Acid etching can be used, for example, to separate a workpiece. In one embodiment, for example, the acid used can be 10% HF /15% $HNO_3$ by volume. Alternatively, 1.5M hydrofluoric acid/0.9M sulfuric acid can be utilized to provide the required etching. This can be done at either room temperatures, or at elevated temperatures, with or without the use of ultrasonic agitation. FIG. 18 shows the impact of acid etching on the strength of the resulting parts. The acid removes material from the outside of the glass, blunting feature edges. Four results are shown - no etch, 2.5 microns of etch removal, 5 microns of etch removal, and 10 microns of etch removal. One can see that acid improves the edge strength, and that beyond 5 microns of etch, no significant further strength is gained. This is likely because the ~1-3 micron feature sizes created by the perforation process are likely the strength limiting edge features, and they are fully removed by 5 microns of etch. However, while some very high strength parts (~1000 MPa) are created by etching these edges, some parts remain that have little improvement in edge strength (~200 MPa).

FIG. 19 shows that ion exchanging as-cut parts of raw Gorilla® glass code 2320 will increase the edge strength by approximate 4X (B10 = just below 600 MPa). The plot shows the Weibull plot for as-cut parts of non-ion exchanged (NIX) glass (i.e., pre-ion exchanged glass), as-cut parts of glass ion-exchanged before the cutting (IOX), and parts cut and then ion-exchanged after the cutting. Of particular importance is that this edge in combination with ion-exchange creates a high strength set of data with an extremely narrow strength distribution (high slope). While ion-exchange is known in general to raise the strength of any cut edge, it is not trivial to get laser cut parts through ion exchange and achieve such a tight strength distribution. If the cut edge has any significant micro-cracking, the stress from the ion exchange bath will cause the parts to fracture, resulting in significant yield loss. In this case, all (100%) of the parts submitted to the ion exchange process survived, indicating no large flaws were present from the laser cutting process. And if the edge has inconsistent feature sizes, such a tight strength distribution will not be achieved. This is a characteristic of the fact that the laser cut edge is consistent and throughout the full body of the material, and does not leave regions with adhered glass or other defects. It shows that the picosecond line-focus cut parts, in combination with ion-exchange, ultimately results in a product with higher reliability (more parts exceeding a given strength threshold) than other possible methods.

Thus, according to some embodiments, cutting processes described herein can provide a glass article comprising pre-ion exchanged non-layered glass with a CT <20 MPa, has at least one edge with a plurality of thin defect lines that extend from one major surface to another major surface. The edge with the defect lines has a defect spacing of less than 20 microns, and the surface roughness between 100 nm and 1000 nm RA. For example, in some embodiments CT < 5MPa, and the surface roughness is 300 to 700 nm Ra. The defect lines containing scallops (open or partially open tubular structures) with the interior (void) width of the scallop of less than 1 micron. For example, according to some embodiments the plurality of defect lines extend at least 250 microns, for example 250 microns to 2 mm, or 300 microns to 1 mm. Such glass article or work piece can be then ion exchanged to improve the edge strength of the article or work piece, converting it to the IOX (ion exchanged) glass article.

Stack cutting of Gorilla®

Finally, FIG. 20 shows the results of simultaneously (single pass) cutting of a stack of four 0.55 mm thick pieces of 2320 IOX (ion-exchanged) glass. The full body cut penetrates all four parts at once, creating a low surface roughness and quality edge on all four pieces. This shows the ability of this laser cutting process to increase cutting throughput by many times compared to the cutting of a single glass sheet. The strength of the edges, and the ability to post-process the glass edges with IOX or other methods to bring them up to very high strength levels, is maintained even when cutting stacks of these materials. In addition, this process is capable of cutting not just through stacked transparent substrates, but also substrates such as glass sheets that are separated by macroscopic air gaps (e.g. gaps > 10 microns or > 100 microns) such as those that may be present in assemble liquid-crystal displays. In contrast to a focused Gaussian beam, a Bessel beam incident upon a glass-air-glass composite structure will not defocus. A focused Gaussian beam will diverge upon entering a first glass layer and will not drill to large depths, or if self-focusing occurs as the glass is drilled, the beam will emerge from the first glass layer and diffract, and will not drill into the second glass layer. Even in the case of laser processes that use Kerr-effect based self-focusing (sometimes referred to as "filamentation") to achieve longer interaction lengths inside materials, having the laser beam leave an upper glass piece and enter air is problematic, as air requires ~20 times more power in air to induce Kerr-effect based self-focusing over the power need to maintain Kerr-effect self-focusing in glass. In contrast, a Bessel beam or line focus formed beam will drill all glass layers over the full extent of the line focus. This allows large stacks of substrates to be cut using a line focus, regardless of gaps in between the substrates, as long as the material and gaps between the substrates are substantially transparent to the incident laser beam.

## Claims

1. A method of laser processing an ion-exchangeable glass workpiece (1), the method comprising:

   focusing a pulsed laser beam (2) into a laser beam focal line (2b) oriented along the beam propagation direction and directed into the ion-exchangeable glass workpiece (1), the laser beam focal line generating an induced absorption within the workpiece, the induced absorption producing a defect line (2c) along the laser beam focal line within the workpiece; and
   translating the workpiece (1) and the laser beam relative (2) to each other along a contour, thereby laser forming a plurality of defect lines (2c) along the contour within the workpiece, wherein a spatial periodicity between adjacent defect lines (2c) is between 0.5 micron and 20 microns.

2. A method according to claim 1, wherein the pulsed laser beam (2) has bursts of two or more pulses separated by a duration within the burst that is between 1 ns and 50 ns and having a burst repetition frequency between 1 kHz and 200 kHz.

3. The method of claim 1 or 2 further comprising separating the workpiece (1) along the contour.

4. The method of any preceding claim, further comprising etching the workpiece (1) in an acid solution, thereby removing material from the separated workpiece.

5. The method of any preceding claim, wherein the workpiece (1) comprises a stack of plural ion-exchangeable glass substrates.

6. The method of any preceding claim, wherein the ion-exchangeable glass workpiece (1) comprises pre-ion exchange glass.

7. The method of any preceding claim, wherein the pulsed laser beam (2) has an average laser energy measured at the material greater than 40 microJoules per mm thickness of material.

8. The method of any preceding claim, wherein the laser beam focal line (2b) has a length in a range of between 0.1 mm and 10 mm.

9. The method of any preceding claim, wherein the laser beam focal line (2b) has an average spot diameter in a range of between 0.1 micron and 5 microns.

10. The method of any preceding claim, wherein the induced absorption produces subsurface damage up to a depth less than or equal to 75 microns within the workpiece.

11. The method of any preceding claim, wherein the induced absorption produces an Ra surface roughness less than or equal to 0.5 micron.

12. A glass article (1) comprising pre-ion exchanged, non-layered, ion-exchangeable glass with a central tension CT <20 MPa, having at least one edge with a plurality of thin defect lines (2c) that extend from one major surface to another major surface, said defect lines have a spacing of less than 20 microns, and said surface having surface roughness between 100 nm and 1000 nm Ra.

13. A glass article according to claim 12, wherein the plurality of defect lines (2c) extend at least 250 microns, the defect lines (2c) each having a diameter less than or equal to 5 microns.

**14.** The glass article of claim 13, wherein the glass has a four point bend edge strength of greater than 600 MegaPascals (MPa).

**15.** The glass article of claim 13 or 14, wherein the edge has an Ra surface roughness less than 0.5 micron.

**Patentansprüche**

**1.** Verfahren zur Laserbearbeitung eines ionenaustauschbaren Glaswerkstücks (1), wobei das Verfahren umfasst:

Bündeln eines gepulsten Laserstrahls (2) in eine entlang der Strahlausbreitungsrichtung orientierte und in das ionenaustauschbare Glaswerkstück (1) gerichtete Laserstrahl-Brennlinie (2b), wobei die Laserstrahl-Brennlinie eine induzierte Absorption innerhalb des Werkstücks erzeugt, wobei die induzierte Absorption eine Defektlinie (2c) entlang der Laserstrahl-Brennlinie innerhalb des Werkstücks erzeugt; und
Verschieben des Werkstücks (1) und des Laserstrahls (2) relativ zueinander entlang einer Kontur, wodurch eine Vielzahl von Defektlinien (2c) entlang der Kontur innerhalb des Werkstücks lasergeformt wird, wobei eine räumliche Periodizität zwischen benachbarten Defektlinien (2c) zwischen 0,5 Mikrometer und 20 Mikrometer beträgt.

**2.** Verfahren nach Anspruch 1, wobei der gepulste Laserstrahl (2) Bursts von zwei oder mehr Pulsen aufweist, die durch eine Dauer innerhalb des Bursts getrennt sind, die zwischen 1 ns und 50 ns liegt, und aufweisend eine Burst-Wiederholungsfrequenz zwischen 1 kHz und 200 kHz.

**3.** Verfahren nach Anspruch 1 oder 2, ferner umfassend das Trennen des Werkstücks (1) entlang der Kontur.

**4.** Verfahren nach einem der vorhergehenden Ansprüche, ferner umfassend das Ätzen des Werkstücks (1) in einer sauren Lösung, wodurch Material von dem abgetrennten Werkstück entfernt wird.

**5.** Verfahren nach einem der vorhergehenden Ansprüche, wobei das Werkstück (1) einen Stapel von mehreren ionenaustauschbaren Glassubstraten umfasst.

**6.** Verfahren nach einem der vorhergehenden Ansprüche, wobei das ionenaustauschbare Glaswerkstück (1) Vor-Ionenaustausch-Glas umfasst.

**7.** Verfahren nach einem der vorhergehenden Ansprüche, wobei der gepulste Laserstrahl (2) eine am Material gemessene durchschnittliche Laserenergie von mehr als 40 Mikrojoule pro mm Materialdicke aufweist.

**8.** Verfahren nach einem der vorhergehenden Ansprüche, wobei die Laserstrahl-Brennlinie (2b) eine Länge im Bereich zwischen 0,1 mm und 10 mm aufweist.

**9.** Verfahren nach einem der vorhergehenden Ansprüche, wobei die Laserstrahl-Brennlinie (2b) einen durchschnittlichen Punktdurchmesser in einem Bereich zwischen 0,1 Mikrometer und 5 Mikrometer aufweist.

**10.** Verfahren nach einem der vorhergehenden Ansprüche, wobei die induzierte Absorption eine Beschädigung unter der Oberfläche bis zu einer Tiefe von weniger als oder gleich 75 Mikrometer innerhalb des Werkstücks erzeugt.

**11.** Verfahren nach einem der vorhergehenden Ansprüche, wobei die induzierte Absorption eine Ra-Oberflächenrauheit von weniger als oder gleich 0,5 Mikron erzeugt.

**12.** Glasgegenstand (1), umfassend vor-ionenausgetauschtes, nicht geschichtetes, ionenaustauschbares Glas mit einer zentralen Spannung CT < 20 MPa, wobei er mindestens eine Kante mit einer Vielzahl von dünnen Defektlinien (2c) aufweist, die sich von einer Hauptfläche zu einer anderen Hauptoberfläche erstrecken, wobei die Defektlinien einen Abstand von weniger als 20 Mikrometer aufweisen und die Oberfläche eine Oberflächenrauhigkeit zwischen 100 nm und 1000 nm Ra aufweist.

**13.** Glasgegenstand nach Anspruch 12, wobei sich die Vielzahl von Defektlinien (2c) über mindestens 250 Mikrometer erstreckt, wobei die Defektlinien (2c) jeweils einen Durchmesser von weniger als oder gleich 5 Mikrometer aufweisen.

**14.** Glasgegenstand nach Anspruch 13, wobei das Glas eine Vierpunkt-Biege-Kantenfestigkeit von mehr als 600 Megapascal (MPa) aufweist.

**15.** Glasgegenstand nach Anspruch 13 oder 14, wobei die Kante eine Ra-Oberflächenrauheit von weniger als 0,5 Mikrometer aufweist.

**Revendications**

**1.** Procédé de traitement au laser d'une pièce à usiner en verre à capacité d'échange d'ions (1), le procédé comprenant :

la focalisation d'un faisceau laser pulsé (2) en une ligne focale de faisceau laser (2b) orientée le long de la direction de propagation de faisceau et dirigée dans la pièce à usiner en verre à capacité d'échange d'ions (1), la ligne focale de faisceau laser générant une absorption induite à l'intérieur de la pièce à usiner, l'absorption induite produisant une ligne de défaut (2c) le long de la ligne focale de faisceau laser à l'intérieur de la pièce à usiner ; et
la translation de la pièce à usiner (1) et du faisceau laser (2) l'un par rapport à l'autre le long d'un contour, formant ainsi au laser une pluralité de lignes de défaut (2c) le long du contour à l'intérieur de la pièce à usiner, une périodicité spatiale entre les lignes de défaut adjacentes (2c) étant comprise entre 0,5 micron et 20 microns.

**2.** Procédé selon la revendication 1, ledit faisceau laser pulsé (2) comportant des rafales de deux impulsions, ou plus, séparées par une durée dans la rafale qui est comprise entre 1 ns et 50 ns et possédant une fréquence de répétition de rafales comprise entre 1 kHz et 200 kHz.

**3.** Procédé selon la revendication 1 ou 2, comprenant en outre la séparation de la pièce à usiner (1) le long du contour.

**4.** Procédé selon une quelconque revendication précédente, comprenant en outre la gravure de la pièce à usiner (1) dans une solution acide, éliminant ainsi la matière de la pièce à usiner séparée.

**5.** Procédé selon une quelconque revendication précédente, ladite pièce à usiner (1) comprenant un empilement de plusieurs substrats en verre à capacité d'échange d'ions.

**6.** Procédé selon une quelconque revendication précédente, ladite pièce à usiner en verre à échange d'ions (1) comprenant du verre avant échange d'ions.

**7.** Procédé selon une quelconque revendication précédente, ledit faisceau laser pulsé (2) possédant une énergie laser moyenne mesurée au niveau du matériau supérieure à 40 microjoules par mm d'épaisseur de matériau.

**8.** Procédé selon une quelconque revendication précédente, ladite ligne focale de faisceau laser (2b) possédant une longueur comprise entre 0,1 mm et 10 mm.

**9.** Procédé selon une quelconque revendication précédente, ladite ligne focale de faisceau laser (2b) possédant un diamètre de spot moyen dans une plage comprise entre 0,1 micron et 5 microns.

**10.** Procédé selon une quelconque revendication précédente, ladite absorption induite produisant des dommages sous la surface jusqu'à une profondeur inférieure ou égale à 75 microns à l'intérieur de la pièce à usiner.

**11.** Procédé selon une quelconque revendication précédente, ladite absorption induite produisant une rugosité de surface Ra inférieure ou égale à 0,5 micron.

**12.** Article en verre (1) comprenant du verre à capacité d'échange d'ions, non stratifié, avant échange d'ions avec une tension centrale CT <20 MPa, possédant au moins un bord avec une pluralité de fines lignes de défauts (2c) qui s'étendent à partir d'une surface principale jusqu'à une autre surface principale, lesdites lignes de défaut présentant un espacement inférieur à 20 microns, et ladite surface possédant une rugosité de surface comprise entre 100 nm et 1000 nm Ra.

**13.** Article en verre selon la revendication 12, ladite pluralité de lignes de défauts (2c) s'étendant sur au moins 250 microns, les lignes de défauts (2c) possédant chacune un diamètre inférieur ou égal à 5 microns.

**14.** Article en verre selon la revendication 13, ledit verre possédant une résistance de bord à la flexion en quatre points supérieure à 600 mégapascals (MPa).

**15.** Article en verre selon la revendication 13 ou 14, ledit bord possédant une rugosité de surface Ra inférieure à 0,5 micron.

FIG. 1.

FIG. 2A

FIG. 2B

FIG. 3A

EP 3 083 513 B1

FIG. 3B-1

FIG. 3B-2

FIG. 3B-3

FIG. 3B-4

coming from 3

material which is
transparent for λ

d

9
2a
6
2b
1a
1
2b,2c
1b

FIG. 4

EP 3 083 513 B1

FIG. 5A

FIG. 5B

Z1a+Z1b = Z1

FIG. 6

FIG. 7A

710
Pulse
"Burst"

720
"Pulse"
or
"Sub-pulse"

710
Pulse
"Burst"

Laser
emission

time

Laser
emission

720

$T_d$:
Individual pulse duration
Short: ~1-100psec

**FIG. 7B**

710
Pulse
"Burst"

720
"Pulse"
or
"Sub-pulse"

710
Pulse
"Burst"

Laser
emission

time

$T_p$:
Pulse-to-pulse period
Short: ~1-50nsec

$T_b$:
Burst-Burst period
= 1/(Repetition Rate)
Longer : ~0.25μsec-1msec

**FIG. 7C**

FIG. 8.

FIG. 9

## Chemically strengthened Gorilla glass

FIG. 10.

FIG. 11.

|             | Max Crack  |                |
| Sample ID   | Depth (um) | Ion Exchanged? |
|-------------|------------|----------------|
| Sample 7 Area 3  | 66 | Y |
| Sample 7 Area 4  | 58 | Y |
| Sample 8 Area 3  | 73 | Y |
| Sample 8 Area 4  | 71 | Y |
| Sample 9 Area 3  | 58 | Y |
| Sample 9 Area 4  | 59 | Y |
| **Avg Depth: 64** | | |
| | | |
| Sample 10 Area 1 | 71 | N |
| Sample 10 Area 2 | 56 | N |
| Sample 11 Area 1 | 51 | N |
| Sample 11 Area 2 | 56 | N |
| Sample 12 Area 1 | 55 | N |
| Sample 12 Area 2 | 56 | N |
| **Avg Depth: 58** | | |

FIG. 12.

| All data in nanometers | | | | | | | | | |
|---|---|---|---|---|---|---|---|---|---|
| **Ra** | **Part #** | | | | | | | | |
| Location | 1 | 2 | 3 | 4 | 5 | 6 | 7 | 8 | 9 |
| 1 | 354 | 412 | 395 | 494 | 426 | 383 | 370 | 408 | 402 |
| 2 | 383 | 379 | 387 | 420 | 430 | 412 | 364 | 410 | 385 |
| 3 | 367 | 367 | 381 | 384 | 418 | 417 | 389 | 484 | 367 |
| 4 | 366 | 362 | 368 | 362 | 381 | 409 | 425 | 509 | 389 |
| 5 | 372 | 369 | 357 | 364 | 361 | 438 | 393 | 416 | 367 |
| ave | 368 | 378 | 378 | 405 | 403 | 412 | 392 | 446 | 382 | 396 |
| st dev | 10.6 | 20 | 15 | 55 | 30 | 19 | 20 | 47 | 15 | 33 |

FIG.13.

FIG. 14.

FIG. 15.

FIG. 16

| Thickness (mm) | Type | CS (MPa) | DOL (um) | CT (MPa) | Total parts | Edge Separation Yield | Broken parts |
|---|---|---|---|---|---|---|---|
| 0.4 | A | 824 | 38.3 | 97.6 | 178 | 100.0% | 0.0% |
| 0.4 | B | 741 | 40 | 92.6 | 180 | 98.8% | 0.0% |
| 0.4 | C | 740 | 35 | 78.5 | 177 | 96.9% | 0.0% |
| 0.4 | D | 857 | 38.8 | 103.1 | 180 | 100.0% | 3.9% |
| 0.4 | E | 860 | 35.4 | 92.5 | 102 | 97.9% | 0.0% |

FIG. 17

FIG. 18.

FIG. 19

FIG. 20.

**EP 3 083 513 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130323469 A
- US 2013012653 A
- US 61752489